(19) Europäisches Patentamt
European Patent Office
Office européen des brevets

(11) **EP 4 345 954 A1**

(12) **EUROPEAN PATENT APPLICATION**

(43) Date of publication:
**03.04.2024 Bulletin 2024/14**

(21) Application number: **23196241.6**

(22) Date of filing: **08.09.2023**

(51) International Patent Classification (IPC):
**H01M 8/0258** $^{(2016.01)}$  **H01M 8/04186** $^{(2016.01)}$
**H01M 8/18** $^{(2006.01)}$

(52) Cooperative Patent Classification (CPC):
**H01M 8/188; H01M 8/0258; H01M 8/04186**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.09.2022 US 202217932245**

(71) Applicant: **ESS Tech, Inc.
Wilsonville, Oregon 97070 (US)**

(72) Inventors:
• **Evans, Craig
  West Linn, OR, 97068 (US)**
• **Kissick, Sean
  Portland, OR, 97202 (US)**
• **Song, Yang
  West Linn, OR, 97068 (US)**

(74) Representative: **von Tietzen und Hennig, Nikolaus
Lorenz Seidler Gossel
Rechtsanwälte Patentanwälte
Partnerschaft mbB
Widenmayerstraße 23
80538 München (DE)**

(54) **ELECTROLYTE FLOW FIELD FOR REBALANCING CELL OF REDOX FLOW BATTERY SYSTEM**

(57)    Systems and methods are provided for a rebalancing cell for a redox flow battery. In one example, a rebalancing cell for a redox flow battery includes a cell enclosure and a stack of electrode assemblies enclosed by the cell enclosure, where each electrode assembly of the stack of electrode assemblies including a positive electrode interfacing with a flow field plate. A face of the flow field plate interfacing with the positive electrode has a plurality of passages including tapered inlets and outlets and partial channels configured to remove gas from electrolyte flowing therethrough.

**FIG. 7B**

**Description**

CROSS REFERENCE TO RELATED APPLICATIONS

The present application is a continuation-in-part of International Application No. PCT/US22/73693 entitled "REBALANCING CELL FOR REDOX FLOW BATTERY SYSTEM" filed July 13, 2022, which claims priority to U.S. Provisional Application No. 63/221,325 entitled "REBALANCING CELL FOR REDOX FLOW BATTERY SYSTEM" filed July 13, 2021 and U.S. Provisional Application No. 63/221,330 entitled "REBALANCING CELL FOR REDOX FLOW BATTERY SYSTEM" filed July 13, 2021. The entire contents of each of the above identified applications are hereby incorporated by reference for all purposes.

FIELD

The present description relates generally to systems for rebalancing cells for use in redox flow battery systems and methods for operating such rebalancing cells.

BACKGROUND AND SUMMARY

Redox flow batteries are suitable for grid-scale storage applications due to their capability for scaling power and capacity independently, as well as for charging and discharging over thousands of cycles with reduced performance losses in comparison to conventional battery technologies. An all-iron hybrid redox flow battery is particularly attractive due to incorporation of low-cost, earth-abundant materials. In general, iron redox flow batteries (IFBs) rely on iron, salt, and water for electrolyte, thus including simple, earth-abundant, and inexpensive materials, and eliminating incorporation of harsh chemicals and reducing an environmental footprint thereof.

The IFB may include a positive (redox) electrode where a redox reaction occurs and a negative (plating) electrode where ferrous iron ($Fe^{2+}$) in the electrolyte may be reduced and plated. Various side reactions may compete with the $Fe^{2+}$ reduction, including proton reduction, iron corrosion, and iron plating oxidation:

$$H^+ + e^- \leftrightarrow \tfrac{1}{2}H_2 \qquad \text{(proton reduction)} \qquad (1)$$

$$Fe^0 + 2H^+ \leftrightarrow Fe^{2+} + H_2 \qquad \text{(iron corrosion)} \qquad (2)$$

$$2Fe^{3+} + Fe^0 \leftrightarrow 3Fe^{2+} \qquad \text{(iron plating oxidation)} \qquad (3)$$

As most side reactions occur at the plating electrode, IFB cycling capabilities may be limited by available iron plating on the plating electrode. Exemplary attempts to ameliorate iron plating loss have focused on catalytic electrolyte rebalancing to address hydrogen ($H_2$) gas generation from equations (1) and (2) and electrolyte charge imbalances (e.g., excess $Fe^{3+}$) from equation (3) and ion crossover via equation (4):

$$Fe^{3+} + \tfrac{1}{2}H_2 \rightarrow Fe^{2+} + H^+ \qquad \text{(electrolyte rebalancing)} \qquad (4)$$

In some examples, electrolyte rebalancing may be realized via a trickle bed or jelly roll reactor setup, wherein the Hz gas and the electrolyte may be contacted at catalyst surfaces for carrying out the electrolyte rebalancing reaction of equation (4). However, lower $Fe^{3+}$ reduction rates of such setups may be undesirable for higher performance applications. In other examples, a fuel cell setup may similarly contact the $H_2$ gas and the electrolyte at catalyst surfaces while applying a direct current (DC) across positive and negative electrode pairs. However, reliability issues may arise in fuel cells as a result of inadvertent reverse current spikes interrupting DC flow.

In one example, the issues described above may be addressed by a rebalancing cell for a redox flow battery, the rebalancing cell including a cell enclosure and a stack of electrode assemblies enclosed by the cell enclosure, each electrode assembly of the stack of electrode assemblies including a positive electrode interfacing with a flow field plate. A face of the flow field plate interfacing with the positive electrode has a plurality of passages including tapered inlets and outlets and partial channels configured to remove gas from electrolyte flowing therethrough. In some examples, the each electrode assembly of the stack of electrode assemblies may be internally shorted. In this way, electrolyte rebalancing in the rebalancing cell may be driven via internal electrical shorting of interfacing pairs of positive and negative electrodes therein while efficient rebalancing of positive electrolyte is enabled.

Specifically, in some examples, the flow field plate has a flow field, formed of the plurality of passages, integrated into the face of the flow field plate. The flow field may control a pressure across the flow field plate, thereby moderating electrolyte flow through the electrode assembly and enhancing reaction rates at the electrodes. In this way, electrochemical performance may be enhanced in the rebalancing cell relative to a non-internally shorted cell without the flow field plate.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

BRIEF DESCRIPTION OF THE DRAWINGS

FIG. 1 shows a schematic diagram of an example redox flow battery system including a battery cell with redox and plating electrodes fluidically coupled to respective rebalancing reactors.

FIGS. 2A and 2B show perspective views of a rebalancing cell including a stack of internally shorted electrode assemblies.

FIG. 3 shows an exploded view of an electrode assembly for the rebalancing cell of FIGS. 2A and 2B.

FIGS. 4A and 4B show a cross-sectional view and a magnified inset view, respectively, of $H_2$ gas flow in the rebalancing cell of FIGS. 2A and 2B.

FIGS. 5A-5E show schematic views of respective exemplary flow field configurations for convecting Hz gas across negative electrodes of a rebalancing cell, such as the rebalancing cell of FIGS. 2A and 2B.

FIG. 6A shows an example of a flow field plate with an integrated flow field, which may be included in an electrode assembly of a rebalancing cell.

FIG. 6B shows an example of a flow field plate having an insert with an integrated flow field, which may be included in an electrode assembly of a rebalancing cell.

FIGS. 7A and 7B show a schematic diagram and a magnified inset view, respectively, of a partially interdigitated flow field which may be integrated into the flow field plates of FIGS 6A-6B.

FIG. 8 shows a flow chart of a method for operating a rebalancing cell including a stack of internally shorted electrode assemblies.

DETAILED DESCRIPTION

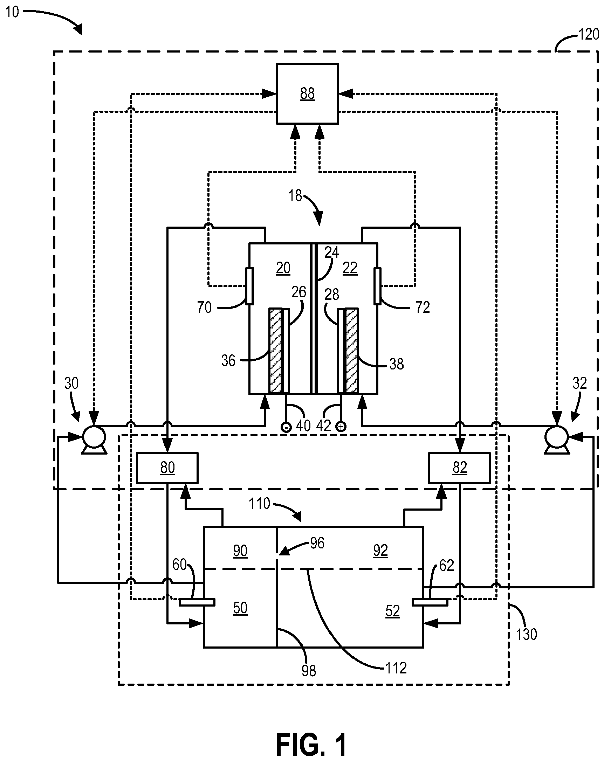

The following description relates to systems and methods for a rebalancing cell driven via internal electrical shorting of electrode assemblies included therein. In an exemplary embodiment, the rebalancing cell may be fluidically coupled to an electrolyte subsystem of a redox flow battery. The redox flow battery is depicted schematically in FIG. 1 with an integrated multi-chambered tank having separate positive and negative electrolyte chambers. In some examples, the redox flow battery may be an all-iron flow battery (IFB) utilizing iron redox chemistry at both a positive (redox) electrode and the negative (plating) electrode of the IFB. The electrolyte chambers may be coupled to one or more battery cells, each cell including the positive and negative electrodes. Therefrom, electrolyte may be pumped through positive and negative electrode compartments respectively housing the positive and negative electrodes.

In some examples, the redox flow battery may be a hybrid redox flow battery. Hybrid redox flow batteries are redox flow batteries which may be characterized by deposition of one or more electroactive materials as a solid layer on an electrode (e.g., the negative electrode). Hybrid redox flow batteries may, for instance, include a chemical species which may plate via an electrochemical reaction as a solid on a substrate throughout a battery charge process. During battery discharge, the plated species may ionize via a further electrochemical reaction, becoming soluble in the electrolyte. In hybrid redox flow battery systems, a charge capacity (e.g., a maximum amount of energy stored) of the redox flow battery may be limited by an amount of metal plated during battery charge and may accordingly depend on an efficiency of the plating system as well as volume and surface area available for plating.

In some examples, electrolytic imbalances in the redox flow battery may result from numerous side reactions competing with desired redox chemistry, including hydrogen ($H_2$) gas generating reactions such as proton reduction and iron corrosion:

$$H^+ + e^- \leftrightarrow \tfrac{1}{2}H_2 \qquad \text{(proton reduction)} \qquad (1)$$

$$Fe^0 + 2H^+ \leftrightarrow Fe^{2+} + H_2 \qquad \text{(iron corrosion)} \qquad (2)$$

and charge imbalances from excess ferric iron ($Fe^{3+}$) generated during oxidation of iron plating:

$$2Fe^{3+} + Fe^0 \leftrightarrow 3Fe^{2+} \quad \text{(iron plating oxidation)} \quad (3)$$

The reactions of equations (1) to (3) may limit iron plating and thereby decrease overall battery capacity. To address such imbalances, electrolyte rebalancing may be leveraged to both reduce $Fe^{3+}$ and eliminate excess $H_2$ gas via a single redox reaction:

$$Fe^{3+} + \tfrac{1}{2}H_2 \rightarrow Fe^{2+} + H^+ \quad \text{(electrolyte rebalancing)} \quad (4)$$

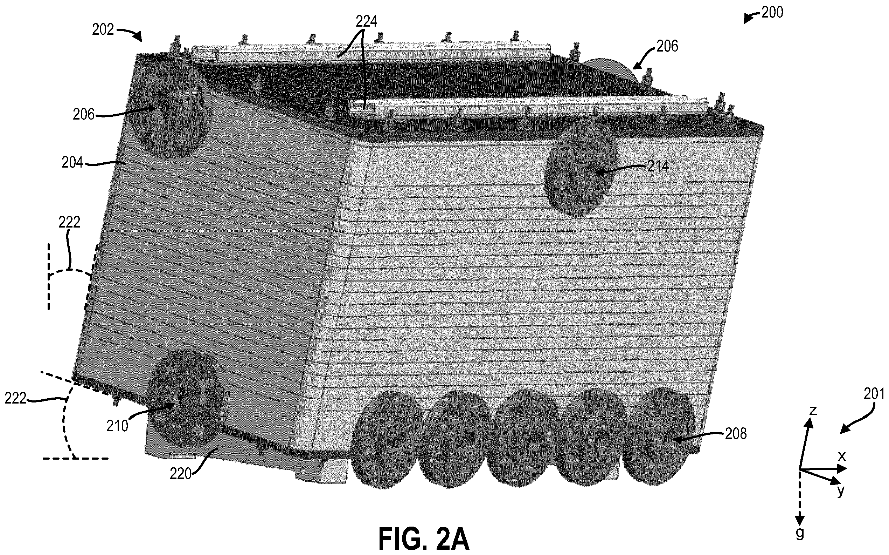

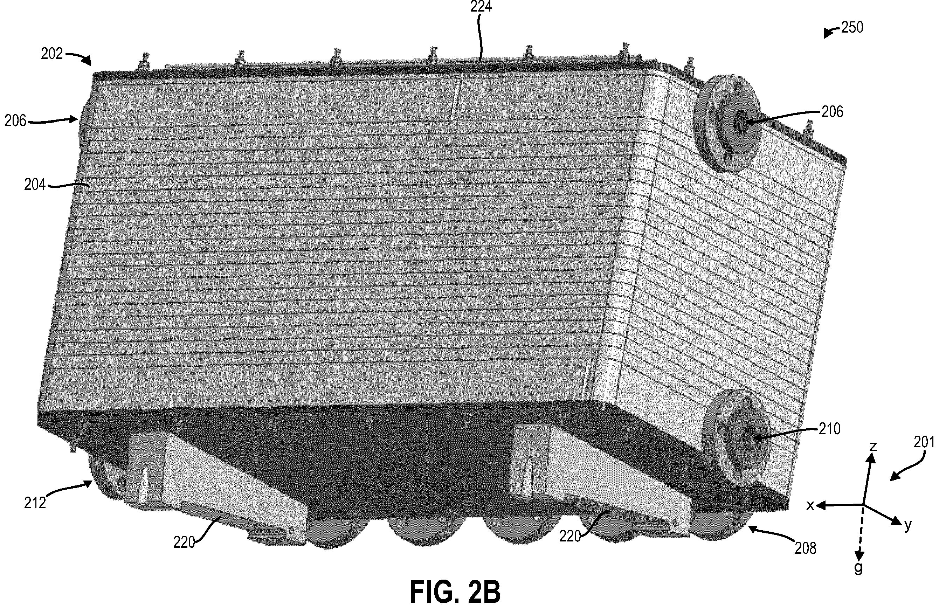

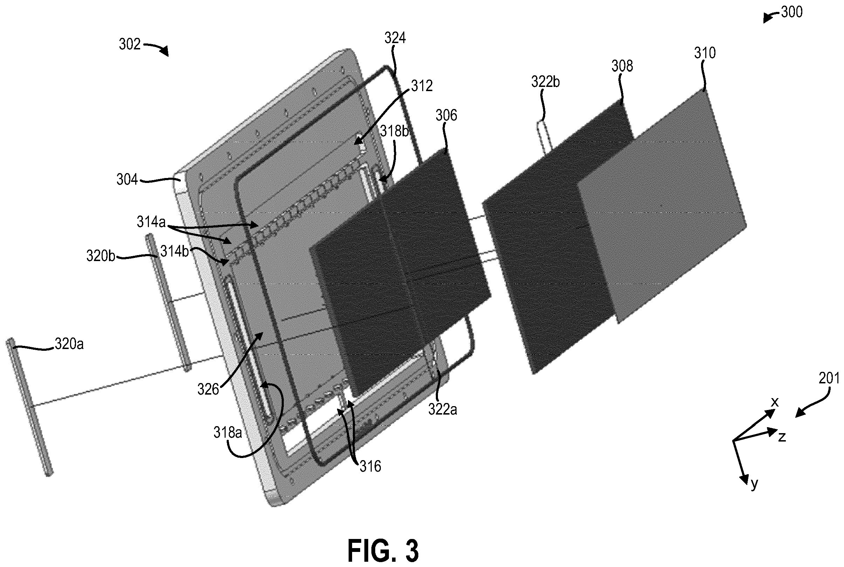

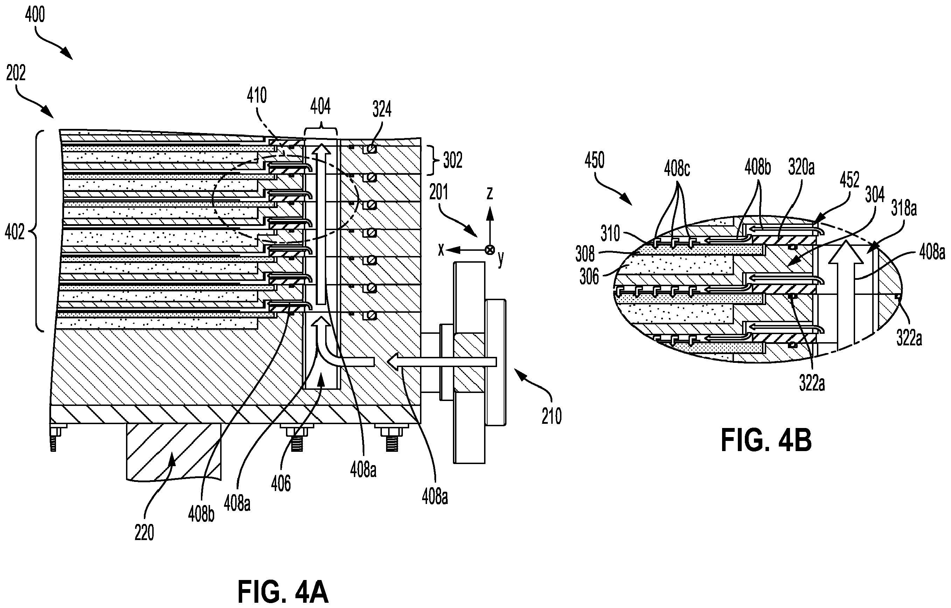

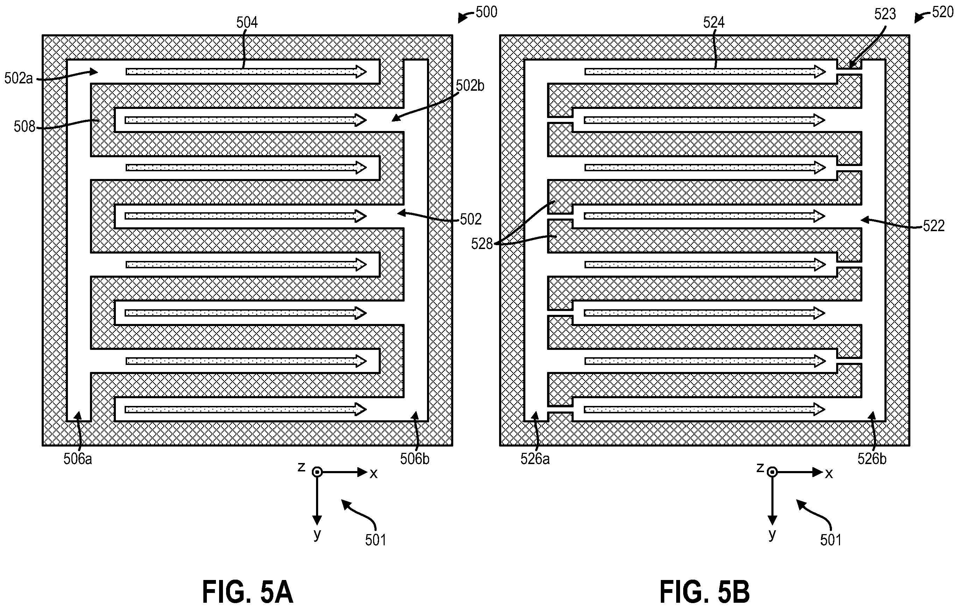

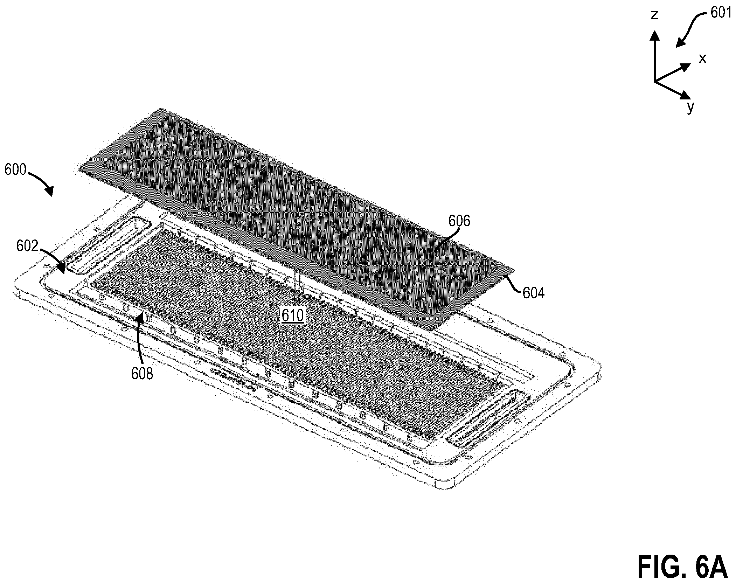

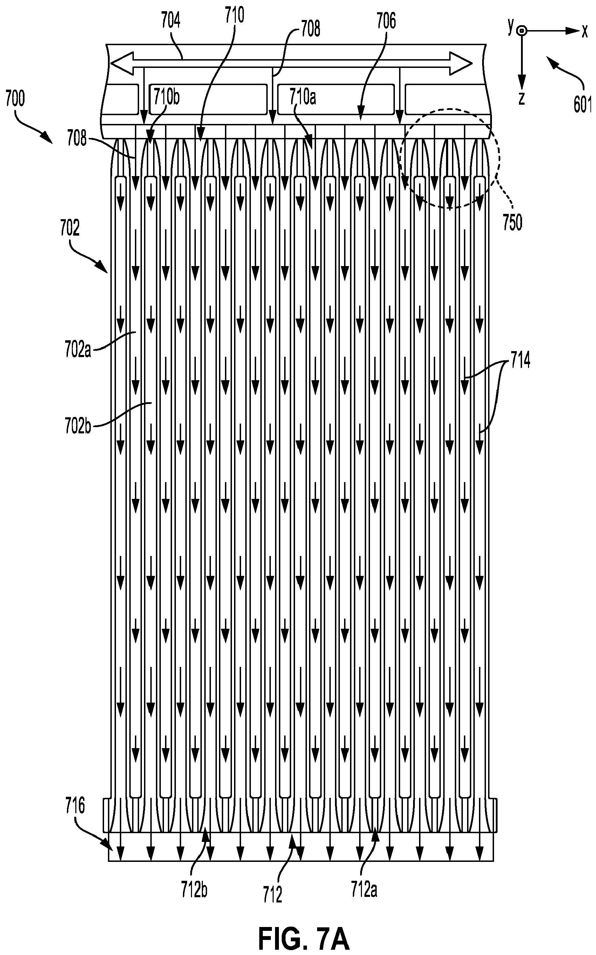

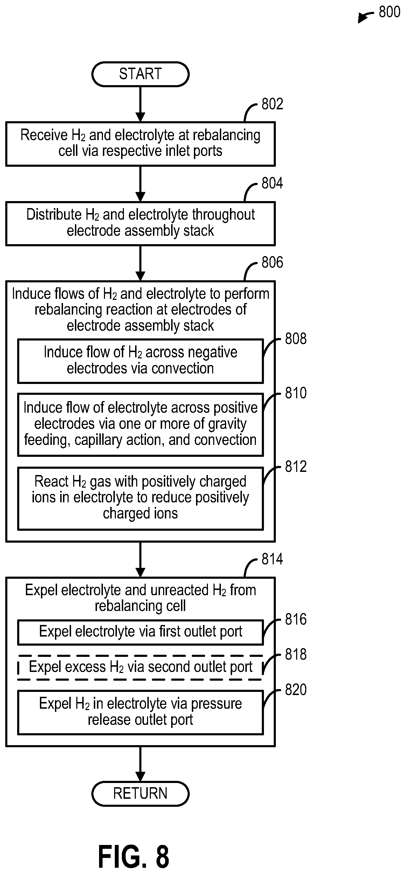

As described by embodiments herein, $Fe^{3+}$ reduction rates sufficient for relatively high performance applications may be reliably achieved via a rebalancing cell, such as the exemplary rebalancing cell of FIGS. 2A and 2B, including a stack of internally shorted electrode assemblies, such as the exemplary electrode assembly of FIG. 3. FIGS. 4A and 4B depict aspects of $H_2$ gas flow in the rebalancing cell, where the Hz gas may be convected across negative electrodes of the internally shorted electrode assemblies via flow field plates, such as the exemplary flow field plate of FIGS. 8A-8D, including respective flow field configurations, such as the exemplary flow field configurations of FIGS. 5A-5E. Examples of flow field plates which may configured with an integrated flow field are illustrated in FIGS. 6A-6B and an exemplary configuration of the integrated flow field is depicted in FIGS. 7A-7B. A method of operating the rebalancing cell is depicted at FIG. 8.

As shown in FIG. 1, in a redox flow battery system 10, a negative electrode 26 may be referred to as a plating electrode and a positive electrode 28 may be referred to as a redox electrode. A negative electrolyte within a plating side (e.g., a negative electrode compartment 20) of a redox flow battery cell 18 may be referred to as a plating electrolyte, and a positive electrolyte on a redox side (e.g., a positive electrode compartment 22) of the redox flow battery cell 18 may be referred to as a redox electrolyte.

"Anode" refers to an electrode where electroactive material loses electrons and "cathode" refers to an electrode where electroactive material gains electrons. During battery charge, the negative electrolyte gains electrons at the negative electrode 26, and the negative electrode 26 is the cathode of the electrochemical reaction. During battery discharge, the negative electrolyte loses electrons, and the negative electrode 26 is the anode of the electrochemical reaction. Alternatively, during battery discharge, the negative electrolyte and the negative electrode 26 may be respectively referred to as an anolyte and the anode of the electrochemical reaction, while the positive electrolyte and the positive electrode 28 may be respectively referred to as a catholyte and the cathode of the electrochemical reaction. During battery charge, the negative electrolyte and the negative electrode 26 may be respectively referred to as the catholyte and the cathode of the electrochemical reaction, while the positive electrolyte and the positive electrode 28 may be respectively referred to as the anolyte and the anode of the electrochemical reaction. For simplicity, the terms "positive" and "negative" are used herein to refer to the electrodes, electrolytes, and electrode compartments in redox flow battery systems.

One example of a hybrid redox flow battery is an all-iron redox flow battery (IFB), in which the electrolyte includes iron ions in the form of iron salts (e.g., $FeCl_2$, $FeCl_3$, and the like), where the negative electrode 26 includes metal iron. For example, at the negative electrode 26, ferrous iron ($Fe^{2+}$) gains two electrons and plates as iron metal ($Fe^0$) onto the negative electrode 26 during battery charge, and $Fe^0$ loses two electrons and re-dissolves as $Fe^{2+}$ during battery discharge. At the positive electrode 28, $Fe^{2+}$ loses an electron to form ferric iron ($Fe^{3+}$) during battery charge, and $Fe^{3+}$ gains an electron to form $Fe^{2+}$ during battery discharge. The electrochemical reaction is summarized in equations (5) and (6), where the forward reactions (left to right) indicate electrochemical reactions during battery charge, while the reverse reactions (right to left) indicate electrochemical reactions during battery discharge:

$$Fe^{2+} + 2e^- \leftrightarrow Fe^0 \quad -0.44 \text{ V} \quad \text{(negative electrode)} \quad (5)$$
$$Fe^{2+} \leftrightarrow 2Fe^{3+} + 2e^- \quad +0.77 \text{ V} \quad \text{(positive electrode)} \quad (6)$$

As discussed above, the negative electrolyte used in the IFB may provide a sufficient amount of $Fe^{2+}$ so that, during battery charge, $Fe^{2+}$ may accept two electrons from the negative electrode 26 to form $Fe^0$ and plate onto a substrate. During battery discharge, the plated $Fe^0$ may lose two electrons, ionizing into $Fe^{2+}$ and dissolving back into the electrolyte. An equilibrium potential of the above reaction is -0.44 V and this reaction therefore provides a negative terminal for the desired system. On the positive side of the IFB, the electrolyte may provide $Fe^{2+}$ during battery charge which loses an electron and oxidizes to $Fe^{3+}$. During battery discharge, $Fe^{3+}$ provided by the electrolyte becomes $Fe^{2+}$ by absorbing an electron provided by the positive electrode 28. An equilibrium potential of this reaction is +0.77 V, creating a positive terminal for the desired system.

The IFB may provide the ability to charge and recharge electrolytes therein in contrast to other battery types utilizing non-regenerating electrolytes. Charge may be achieved by respectively applying an electric current across the electrodes 26 and 28 via terminals 40 and 42. The negative electrode 26 may be electrically coupled via the terminal 40 to a negative side of a voltage source so that electrons may be delivered to the negative electrolyte via the positive electrode 28 (e.g., as $Fe^{2+}$ is oxidized to $Fe^{3+}$ in the positive electrolyte in the positive electrode compartment 22). The electrons provided to the negative electrode 26 may reduce the $Fe^{2+}$ in the negative electrolyte to form $Fe^0$ at the (plating) substrate, causing the $Fe^{2+}$ to plate onto the negative electrode 26.

Discharge may be sustained while $Fe^0$ remains available to the negative electrolyte for oxidation and while $Fe^{3+}$ remains available in the positive electrolyte for reduction. As an example, $Fe^{3+}$ availability may be maintained by increasing a concentration or a volume of the positive electrolyte in the positive electrode compartment 22 side of the redox flow battery cell 18 to provide additional $Fe^{3+}$ ions via an external source, such as an external positive electrolyte chamber 52. More commonly, availability of $Fe^0$ during discharge may be an issue in IFB systems, wherein the $Fe^0$ available for discharge may be proportional to a surface area and a volume of the negative electrode substrate, as well as to a plating efficiency. Charge capacity may be dependent on the availability of $Fe^{2+}$ in the negative electrode compartment 20. As an example, $Fe^{2+}$ availability may be maintained by providing additional $Fe^{2+}$ ions via an external source, such as an external negative electrolyte chamber 50 to increase a concentration or a volume of the negative electrolyte to the negative electrode compartment 20 side of the redox flow battery cell 18.

In an IFB, the positive electrolyte may include ferrous iron, ferric iron, ferric complexes, or any combination thereof, while the negative electrolyte may include ferrous iron or ferrous complexes, depending on a state of charge (SOC) of the IFB system. As previously mentioned, utilization of iron ions in both the negative electrolyte and the positive electrolyte may allow for utilization of the same electrolytic species on both sides of the redox flow battery cell 18, which may reduce electrolyte cross-contamination and may increase the efficiency of the IFB system, resulting in less electrolyte replacement as compared to other redox flow battery systems.

Efficiency losses in an IFB may result from electrolyte crossover through a separator 24 (e.g., ion-exchange membrane barrier, microporous membrane, and the like). For example, $Fe^{3+}$ ions in the positive electrolyte may be driven toward the negative electrolyte by a $Fe^{3+}$ ion concentration gradient and an electrophoretic force across the separator 24. Subsequently, $Fe^{3+}$ ions penetrating the separator 24 and crossing over to the negative electrode compartment 20 may result in coulombic efficiency losses. $Fe^{3+}$ ions crossing over from the low pH redox side (e.g., more acidic positive electrode compartment 22) to the high pH plating side (e.g., less acidic negative electrode compartment 20) may result in precipitation of $Fe(OH)_3$. Precipitation of $Fe(OH)_3$ may degrade the separator 24 and cause permanent battery performance and efficiency losses. For example, $Fe(OH)_3$ precipitate may chemically foul an organic functional group of an ion-exchange membrane or physically clog micropores of the ion-exchange membrane. In either case, due to the $Fe(OH)_3$ precipitate, membrane ohmic resistance may rise over time and battery performance may degrade. Precipitate may be removed by washing the IFB with acid, but constant maintenance and downtime may be disadvantageous for commercial battery applications. Furthermore, washing may be dependent on regular preparation of electrolyte, contributing to additional processing costs and complexity. Alternatively, adding specific organic acids to the positive electrolyte and the negative electrolyte in response to electrolyte pH changes may mitigate precipitate formation during battery charge and discharge cycling without driving up overall costs. Additionally, implementing a membrane barrier that inhibits $Fe^{3+}$ ion crossover may also mitigate fouling.

Additional coulombic efficiency losses may be caused by reduction of $H^+$ (e.g., protons) and subsequent formation of $H_2$ gas, and a reaction of protons in the negative electrode compartment 20 with electrons supplied at the plated iron metal of the negative electrode 26 to form $H_2$ gas.

The IFB electrolyte (e.g., $FeCl_2$, $FeCl_3$, $FeSO_4$, $Fe_2(SO_4)_3$, and the like) may be readily available and may be produced at low costs. In one example, the IFB electrolyte may be formed from ferrous chloride (FeCl₂), potassium chloride (KCl), manganese(II) chloride (MnCl₂), and boric acid ($H_3BO_3$). The IFB electrolyte may offer higher reclamation value because the same electrolyte may be used for the negative electrolyte and the positive electrolyte, consequently reducing cross-contamination issues as compared to other systems. Furthermore, because of iron's electron configuration, iron may solidify into a generally uniform solid structure during plating thereof on the negative electrode substrate. For zinc and other metals commonly used in hybrid redox batteries, solid dendritic structures may form during plating. A stable electrode morphology of the IFB system may increase the efficiency of the battery in comparison to other redox flow batteries. Further still, iron redox flow batteries may reduce the use of toxic raw materials and may operate at a relatively neutral pH as compared to other redox flow battery electrolytes. Accordingly, IFB systems may reduce environmental hazards as compared with all other current advanced redox flow battery systems in production.

Continuing with FIG. 1, a schematic illustration of the redox flow battery system 10 is shown. The redox flow battery system 10 may include the redox flow battery cell 18 fluidly coupled to an integrated multi-chambered electrolyte storage tank 110. The redox flow battery cell 18 may include the negative electrode compartment 20, separator 24, and positive electrode compartment 22. The separator 24 may include an electrically insulating ionic conducting barrier which prevents bulk mixing of the positive electrolyte and the negative electrolyte while allowing conductance of specific ions therethrough. For example, and as discussed above, the separator 24 may include an ion-exchange membrane and/or a microporous membrane.

The negative electrode compartment 20 may include the negative electrode 26, and the negative electrolyte may include electroactive materials. The positive electrode compartment 22 may include the positive electrode 28, and the positive electrolyte may include electroactive materials. In some examples, multiple redox flow battery cells 18 may be combined in series or in parallel to generate a higher voltage or electric current in the redox flow battery system 10.

Further illustrated in FIG. 1 are negative and positive electrolyte pumps 30 and 32, both used to pump electrolyte solution through the redox flow battery system 10. Electrolytes are stored in one or more tanks external to the cell, and are pumped via the negative and positive electrolyte pumps 30 and 32 through the negative electrode compartment 20 side and the positive electrode compartment 22 side of the redox flow battery cell 18, respectively.

The redox flow battery system 10 may also include a first bipolar plate 36 and a second bipolar plate 38, each positioned along a rear-facing side, e.g., opposite of a side facing the separator 24, of the negative electrode 26 and the positive electrode 28, respectively. The first bipolar plate 36 may be in contact with the negative electrode 26 and the second bipolar plate 38 may be in contact with the positive electrode 28. In other examples, however, the bipolar plates 36 and 38 may be arranged proximate but spaced away from the electrodes 26 and 28 and housed within the respective electrode compartments 20 and 22. In either case, the bipolar plates 36 and 38 may be electrically coupled to the terminals 40 and 42, respectively, either via direct contact therewith or through the negative and positive electrodes 26 and 28, respectively. The IFB electrolytes may be transported to reaction sites at the negative and positive electrodes 26 and 28 by the first and second bipolar plates 36 and 38, resulting from conductive properties of a material of the bipolar plates 36 and 38. Electrolyte flow may also be assisted by the negative and positive electrolyte pumps 30 and 32, facilitating forced convection through the redox flow battery cell 18. Reacted electrochemical species may also be directed away from the reaction sites by a combination of forced convection and a presence of the first and second bipolar plates 36 and 38.

As illustrated in FIG. 1, the redox flow battery cell 18 may further include the negative battery terminal 40 and the positive battery terminal 42. When a charge current is applied to the battery terminals 40 and 42, the positive electrolyte may be oxidized (loses one or more electrons) at the positive electrode 28, and the negative electrolyte may be reduced (gains one or more electrons) at the negative electrode 26. During battery discharge, reverse redox reactions may occur on the electrodes 26 and 28. In other words, the positive electrolyte may be reduced (gains one or more electrons) at the positive electrode 28, and the negative electrolyte may be oxidized (loses one or more electrons) at the negative electrode 26. An electrical potential difference across the battery may be maintained by the electrochemical redox reactions in the positive electrode compartment 22 and the negative electrode compartment 20, and may induce an electric current through a current collector while the reactions are sustained. An amount of energy stored by a redox battery may be limited by an amount of electroactive material available in electrolytes for discharge, depending on a total volume of electrolytes and a solubility of the electroactive materials.

The redox flow battery system 10 may further include the integrated multi-chambered electrolyte storage tank 110. The multi-chambered electrolyte storage tank 110 may be divided by a bulkhead 98. The bulkhead 98 may create multiple chambers within the multi-chambered electrolyte storage tank 110 so that both the positive and negative electrolytes may be included within a single tank. The negative electrolyte chamber 50 holds negative electrolyte including the electroactive materials, and the positive electrolyte chamber 52 holds positive electrolyte including the electroactive materials. The bulkhead 98 may be positioned within the multi-chambered electrolyte storage tank 110 to yield a desired volume ratio between the negative electrolyte chamber 50 and the positive electrolyte chamber 52. In one example, the bulkhead 98 may be positioned to set a volume ratio of the negative and positive electrolyte chambers 50 and 52 according to a stoichiometric ratio between the negative and positive redox reactions. FIG. 1 further illustrates a fill height 112 of the multi-chambered electrolyte storage tank 110, which may indicate a liquid level in each tank compartment. FIG. 1 also shows a gas head space 90 located above the fill height 112 of the negative electrolyte chamber 50, and a gas head space 92 located above the fill height 112 of the positive electrolyte chamber 52. The gas head space 92 may be utilized to store $H_2$ gas generated through operation of the redox flow battery (e.g., due to proton reduction and iron corrosion side reactions) and conveyed to the multi-chambered electrolyte storage tank 110 with returning electrolyte from the redox flow battery cell 18. The $H_2$ gas may be separated spontaneously at a gas-liquid interface (e.g., the fill height 112) within the multi-chambered electrolyte storage tank 110, thereby precluding having additional gas-liquid separators as part of the redox flow battery system 10. Once separated from the electrolyte, the $H_2$ gas may fill the gas head spaces 90 and 92. In other words, the gas head spaces 90 and 92, may form a continuous gas head space common to each of the negative electrolyte chamber 50 and the positive electrolyte chamber 52. As such, the stored $H_2$ gas may aid in purging other gases from the multi-chambered electrolyte storage tank 110, thereby acting as an inert gas blanket for reducing oxidation of electrolyte species, which may help to reduce redox flow battery capacity losses. In this way, utilizing the integrated multi-chambered electrolyte storage tank 110 may forego having separate negative and positive electrolyte storage tanks, hydrogen storage tanks, and gas-liquid separators common to conventional redox flow battery systems, thereby simplifying a system design, reducing a physical footprint of the redox flow battery system 10, and reducing system costs.

FIG. 1 also shows a spillover hole 96, which may create an opening in the bulkhead 98 between the gas head spaces 90 and 92, and may provide a means of equalizing gas pressure between the chambers 50 and 52. The spillover hole 96 may be positioned at a threshold height above the fill height 112. The spillover hole 96 may further enable a capability to self-balance the electrolytes in each of the negative and positive electrolyte chambers 50 and 52 in the event of a battery crossover. In the case of an all-iron redox flow battery system, the same electrolyte ($Fe^{2+}$) is used in both negative and positive electrode compartments 20 and 22, so spilling over of electrolyte between the negative and positive electrolyte chambers 50 and 52 may reduce overall system efficiency, but overall electrolyte composition, battery module performance, and battery module capacity may be maintained. Flange fittings may be utilized for all piping connections for inlets and outlets to and from the multi-chambered electrolyte storage tank 110 to maintain a continuously pressurized state without leaks. The multi-chambered electrolyte storage tank 110 may include at least one outlet from each of the negative and positive electrolyte chambers 50 and 52, and at least one inlet to each of the negative and positive electrolyte chambers 50 and 52. Furthermore, one or more outlet connections may be provided from the gas head spaces 90 and 92 for directing $H_2$ gas to rebalancing reactors or cells 80 and 82, such that the rebalancing reactors or cells 80 and 82 may be respectively fluidically coupled to the gas head spaces 90 and 92.

Although not shown in FIG. 1, the integrated multi-chambered electrolyte storage tank 110 may further include one or more heaters thermally coupled to each of the negative electrolyte chamber 50 and the positive electrolyte chamber 52. In alternate examples, only one of the negative and positive electrolyte chambers 50 and 52 may include one or more heaters. In the case where only the positive electrolyte chamber 52 includes one or more heaters, the negative electrolyte may be heated by transferring heat generated at the redox flow battery cell 18 to the negative electrolyte. In this way, the redox flow battery cell 18 may heat and facilitate temperature regulation of the negative electrolyte. The one or more heaters may be actuated by a controller 88 to regulate a temperature of the negative electrolyte chamber 50 and the positive electrolyte chamber 52 independently or together. For example, in response to an electrolyte temperature decreasing below a threshold temperature, the controller 88 may increase a power supplied to one or more heaters so that a heat flux to the electrolyte may be increased. The electrolyte temperature may be indicated by one or more temperature sensors mounted at the multi-chambered electrolyte storage tank 110, such as sensors 60 and 62. As examples, the one or more heaters may include coil type heaters or other immersion heaters immersed in the electrolyte fluid, or surface mantle type heaters that transfer heat conductively through the walls of the negative and positive electrolyte chambers 50 and 52 to heat the fluid therein. Other known types of tank heaters may be employed without departing from the scope of the present disclosure. Furthermore, the controller 88 may deactivate the one or more heaters in the negative and positive electrolyte chambers 50 and 52 in response to a liquid level decreasing below a solids fill threshold level. Said in another way, in some examples, the controller 88 may activate the one or more heaters in the negative and positive electrolyte chambers 50 and 52 only in response to a liquid level increasing above the solids fill threshold level. In this way, activating the one or more heaters without sufficient liquid in the negative and/or positive electrolyte chambers 50, 52 may be averted, thereby reducing a risk of overheating or burning out the heater(s).

Further still, one or more inlet connections may be provided to each of the negative and positive electrolyte chambers 50 and 52 from a field hydration system (not shown). In this way, the field hydration system may facilitate commissioning of the redox flow battery system 10, including installing, filling, and hydrating the redox flow battery system 10, at an end-use location. Furthermore, prior to commissioning the redox flow battery system 10 at the end-use location, the redox flow battery system 10 may be dry-assembled at a battery manufacturing facility different from the end-use location without filling and hydrating the redox flow battery system 10, before delivering the redox flow battery system 10 to the end-use location. In one example, the end-use location may correspond to a location where the redox flow battery system 10 is to be installed and utilized for on-site energy storage. Said another way, the redox flow battery system 10 may be designed such that, once installed and hydrated at the end-use location, a position of the redox flow battery system 10 may become fixed, and the redox flow battery system 10 may no longer be deemed a portable, dry system. Thus, from a perspective of an end-user, the dry, portable redox flow battery system 10 may be delivered on-site, after which the redox flow battery system 10 may be installed, hydrated, and commissioned. Prior to hydration, the redox flow battery system 10 may be referred to as a dry, portable system, the redox flow battery system 10 being free of or without water and wet electrolyte. Once hydrated, the redox flow battery system 10 may be referred to as a wet, non-portable system, the redox flow battery system 10 including wet electrolyte.

Further illustrated in FIG. 1, electrolyte solutions primarily stored in the multi-chambered electrolyte storage tank 110 may be pumped via the negative and positive electrolyte pumps 30 and 32 throughout the redox flow battery system 10. Electrolyte stored in the negative electrolyte chamber 50 may be pumped via the negative electrolyte pump 30 through the negative electrode compartment 20 side of the redox flow battery cell 18, and electrolyte stored in the positive electrolyte chamber 52 may be pumped via the positive electrolyte pump 32 through the positive electrode compartment 22 side of the redox flow battery cell 18.

The electrolyte rebalancing reactors 80 and 82 may be connected in line or in parallel with the recirculating flow paths of the electrolyte at the negative and positive sides of the redox flow battery cell 18, respectively, in the redox flow battery system 10. One or more rebalancing reactors may be connected in-line with the recirculating flow paths of the electrolyte at the negative and positive sides of the battery, and other rebalancing reactors may be connected in parallel, for redundancy (e.g., a rebalancing reactor may be serviced without disrupting battery and rebalancing operations) and for increased rebalancing capacity. In one example, the electrolyte rebalancing reactors 80 and 82 may be placed in a return flow path from the negative and positive electrode compartments 20 and 22 to the negative and positive electrolyte chambers 50 and 52, respectively. The electrolyte rebalancing reactors 80 and 82 may serve to rebalance electrolyte charge imbalances in the redox flow battery system 10 occurring due to side reactions, ion crossover, and the like, as described herein.

In some examples, one or both of the rebalancing reactors 80 and 82 may include trickle bed reactors, where the Hz gas and the (liquid) electrolyte may be contacted at catalyst surfaces in a packed bed for carrying out the electrolyte rebalancing reaction. Additionally or alternatively, one or both of the rebalancing reactors 80 and 82 may have catalyst beds configured in a jelly roll. In additional or alternative examples, one or both of the rebalancing reactors 80 and 82 may include flow-through type reactors that are capable of contacting the $H_2$ gas and the electrolyte and carrying out the electrolyte rebalancing reactions absent a packed catalyst bed. However, lower $Fe^{3+}$ reduction rates (e.g., on the order of ~1-3 mol/m²hr) during electrolyte rebalancing may preclude implementation of such rebalancing reactor configurations in higher performance applications.

In other examples, one or both of the rebalancing reactors 80 and 82 may include fuel cells, where the $H_2$ gas and the electrolyte may be contacted at catalyst surfaces for carrying out the electrolyte rebalancing reaction and where a closed circuit may be formed by directing electric current from the fuel cells through an external load. However, reverse current spikes [e.g., transient increases in reverse electric current, where "reverse electric current" may be used herein to refer to any electric current traveling along an electrical pathway in a direction opposite from expected (that is, opposite from a "forward" direction)] in such fuel cells may be unavoidable in certain circumstances, undermining a reliability of such rebalancing reaction configurations.

To increase the $Fe^{3+}$ reduction rate without sacrificing an overall reliability of the rebalancing reactors 80 and 82, embodiments of the present disclosure provide a rebalancing cell, such as the rebalancing cell of FIGS. 2A and 2B, including a stack of internally shorted electrode assemblies, such as the electrode assembly of FIG. 3, configured to drive the $H_2$ gas and the electrolyte to react at catalyst surfaces via a combination of internal electric current, convection, gravity feeding, and capillary action. In embodiments described herein, the electrode assemblies of the stack of internally shorted electrode assemblies may be referred to as "internally shorted," in that no electric current may be directed away from the stack of internally shorted electrode assemblies during operation of the rebalancing cell. Such internal electrical shorting may reduce or obviate reverse current spikes while drastically increasing the $Fe^{3+}$ reduction rate (e.g., to as high as ~50-70 mol/m²hr) and concomitantly decreasing side reaction rates (e.g., rates of the reactions of equations (1)-(3)). Further, each electrode assembly of the stack of internally shorted electrode assemblies may be electrically decoupled from each other electrode assembly of the stack of internally shorted electrode assemblies, such that degradation to the stack of internally shorted electrode assemblies during current spikes at one electrode assembly may be limited thereto (e.g., reverse electric current may not be driven from one electrode assembly through the other electrode assemblies). In such cases, the single, degraded electrode assembly may be easily removed from the stack of internally shorted electrode assemblies and replaced with a non-degraded electrode assembly.

To realize the internally shorted circuit, each electrode assembly of the stack of internally shorted electrode assemblies may include an interfacing pair of positive and negative electrodes (e.g., configured in face-sharing contact with one another so as to be continuously electrically conductive). As used herein, a pair of first and second components (e.g., positive and negative electrodes of an electrode assembly) may be described as "interfacing" with one another when the first component is arranged adjacent to the second component such that the first and second components are in face-sharing contact with one another (where "adjacent" is used herein to refer to any two components having no intervening components therebetween). Further, as used herein, "continuously" when describing electrical conductivity of multiple electrodes may refer to an electrical pathway therethrough having effectively or practically zero resistance at any face-sharing interfaces of the multiple electrodes.

In an exemplary embodiment, the (positive) rebalancing reactor 82 may be the rebalancing cell including the stack of internally shorted electrode assemblies. Higher $Fe^{3+}$ reduction rates may be desirable to rebalance the positive electrolyte, as significant amounts of $Fe^{3+}$ may be generated at the positive electrode 28 during battery charging (see equation (6)). In additional or alternative embodiments, the (negative) rebalancing reactor 80 may be of like configuration [$Fe^{3+}$ may be generated at the negative electrode 26 during iron plating oxidation (see equation (3))].

During operation of the redox flow battery system 10, sensors and probes may monitor and control chemical properties of the electrolyte such as electrolyte pH, concentration, SOC, and the like. For example, as illustrated in FIG. 1, sensors 62 and 60 maybe be positioned to monitor positive electrolyte and negative electrolyte conditions at the positive electrolyte chamber 52 and the negative electrolyte chamber 50, respectively. In another example, sensors 62 and 60 may each include one or more electrolyte level sensors to indicate a level of electrolyte in the positive electrolyte chamber 52 and the negative electrolyte chamber 50, respectively. As another example, sensors 72 and 70, also illustrated in FIG. 1, may monitor positive electrolyte and negative electrolyte conditions at the positive electrode compartment 22 and the negative electrode compartment 20, respectively. The sensors 72 and 70 may be pH probes, optical probes, pressure sensors, voltage sensors, etc. It will be appreciated that sensors may be positioned at other locations throughout the redox flow battery system 10 to monitor electrolyte chemical properties and other properties.

For example, a sensor may be positioned in an external acid tank (not shown) to monitor acid volume or pH of the external acid tank, wherein acid from the external acid tank may be supplied via an external pump (not shown) to the redox flow battery system 10 in order to reduce precipitate formation in the electrolytes. Additional external tanks and sensors may be installed for supplying other additives to the redox flow battery system 10. For example, various sensors including, temperature, conductivity, and level sensors of a field hydration system may transmit signals to the controller 88. Furthermore, the controller 88 may send signals to actuators such as valves and pumps of the field hydration system during hydration of the redox flow battery system 10. Sensor information may be transmitted to the controller 88 which may in turn actuate the pumps 30 and 32 to control electrolyte flow through the redox flow battery cell 18, or to perform other control functions, as an example. In this manner, the controller 88 may be responsive to one or a combination of sensors and probes.

The redox flow battery system 10 may further include a source of $H_2$ gas. In one example, the source of $H_2$ gas may include a separate dedicated hydrogen gas storage tank. In the example of FIG. 1, $H_2$ gas may be stored in and supplied from the integrated multi-chambered electrolyte storage tank 110. The integrated multi-chambered electrolyte storage tank 110 may supply additional $H_2$ gas to the positive electrolyte chamber 52 and the negative electrolyte chamber 50. The integrated multi-chambered electrolyte storage tank 110 may alternately supply additional $H_2$ gas to an inlet of the electrolyte rebalancing reactors 80 and 82. As an example, a mass flow meter or other flow controlling device (which may be controlled by the controller 88) may regulate flow of the $H_2$ gas from the integrated multi-chambered electrolyte storage tank 110. The integrated multi-chambered electrolyte storage tank 110 may supplement the $H_2$ gas generated in the redox flow battery system 10. For example, when gas leaks are detected in the redox flow battery system 10 or when a reduction reaction rate (e.g., the $Fe^{3+}$ reduction rate) is too low at low hydrogen partial pressure, the $H_2$ gas may be supplied from the integrated multi-chambered electrolyte storage tank 110 in order to rebalance the SOC of the electroactive materials in the positive electrolyte and the negative electrolyte. As an example, the controller 88 may supply the $H_2$ gas from the integrated multi-chambered electrolyte storage tank 110 in response to a measured change in pH or in response to a measured change in SOC of an electrolyte or an electroactive material.

For example, an increase in pH of the negative electrolyte chamber 50, or the negative electrode compartment 20, may indicate that $H_2$ gas is leaking from the redox flow battery system 10 and/or that the reaction rate is too slow with the available hydrogen partial pressure, and the controller 88, in response to the pH increase, may increase a supply of $H_2$ gas from the integrated multi-chambered electrolyte storage tank 110 to the redox flow battery system 10. As a further example, the controller 88 may supply $H_2$ gas from the integrated multi-chambered electrolyte storage tank 110 in response to a pH change, wherein the pH increases beyond a first threshold pH or decreases beyond a second threshold pH. In the case of an IFB, the controller 88 may supply additional $H_2$ gas to increase a rate of reduction of $Fe^{3+}$ ions and a rate of production of protons, thereby reducing the pH of the positive electrolyte. Furthermore, the pH of the negative electrolyte may be lowered by hydrogen reduction of $Fe^{3+}$ ions crossing over from the positive electrolyte to the negative electrolyte or by protons, generated at the positive side, crossing over to the negative electrolyte due to a proton concentration gradient and electrophoretic forces. In this manner, the pH of the negative electrolyte may be maintained within a stable region, while reducing the risk of precipitation of $Fe^{3+}$ ions (crossing over from the positive electrode compartment 22) as $Fe(OH)_3$.

Other control schemes for controlling a supply rate of $H_2$ gas from the integrated multi-chambered electrolyte storage tank 110 responsive to a change in an electrolyte pH or to a change in an electrolyte SOC, detected by other sensors such as an oxygen-reduction potential (ORP) meter or an optical sensor, may be implemented. Further still, the change in pH or SOC triggering action of the controller 88 may be based on a rate of change or a change measured over a time period. The time period for the rate of change may be predetermined or adjusted based on time constants for the redox flow battery system 10. For example, the time period may be reduced if a recirculation rate is high, and local changes in concentration (e.g., due to side reactions or gas leaks) may quickly be measured since the time constants may be small.

The controller 88 may further execute control schemes based on an operating mode of the redox flow battery system 10. For example, and as discussed in detail below with reference to FIG. 11, in tandem with controlling flow of the $H_2$ gas to the rebalancing reactors 80 and 82 as described above, the controller 88 may control flows of the negative and positive electrolytes to the rebalancing reactors 80 and 82, respectively, during charging and discharging of the redox flow battery cell 18 so as to simultaneously rid the redox flow battery system 10 of excess $H_2$ gas and reduce $Fe^{3+}$ ion concentration. After electrolyte rebalancing, the controller 88 may direct flow of any excess or unreacted $H_2$ along with the rebalanced negative and positive electrolytes (e.g., including a decreased concentration of $Fe^{3+}$ and an increased concentration of $Fe^{2+}$) from the rebalancing reactors 80 and 82 back into the respective electrolyte chambers 50 and 52 of the multi-chambered electrolyte storage tank 110. Additionally or alternatively, the unreacted $H_2$ gas may

be returned to the separate dedicated hydrogen gas storage tank (not shown at FIG. 1).

As another example, the controller 88 may further control charging and discharging of the redox flow battery cell 18 so as to cause iron preformation at the negative electrode 26 during system conditioning (where system conditioning may include an operating mode employed to optimize electrochemical performance of the redox flow battery system 10 outside of battery cycling). That is, during system conditioning, the controller 88 may adjust one or more operating conditions of the redox flow battery system 10 to plate iron metal on the negative electrode 26 to improve a battery charge capacity during subsequent battery cycling (thus, the iron metal may be preformed for battery cycling). In this way, preforming iron at the negative electrode 26 and running electrolyte rebalancing during the system conditioning may increase an overall capacity of the redox flow battery cell 18 during battery cycling by mitigating iron plating loss. As used herein, battery cycling (also referred to as "charge cycling") may include alternating between a charging mode and a discharging mode of the redox flow battery system 10.

It will be appreciated that all components apart from the sensors 60 and 62 and the integrated multi-chambered electrolyte storage tank 110 (and components included therein) may be considered as being included in a power module 120. As such, the redox flow battery system 10 may be described as including the power module 120 fluidly coupled to the integrated multi-chambered electrolyte storage tank 110 and communicably coupled to the sensors 60 and 62. In some examples, each of the power module 120 and the multi-chambered electrolyte storage tank 110 may be included in a single housing or packaging (not shown), such that the redox flow battery system 10 may be contained as a single unit in a single location. It will further be appreciated the positive electrolyte, the negative electrolyte, the sensors 60 and 62, the electrolyte rebalancing reactors 80 and 82, and the integrated multi-chambered electrolyte storage tank 110 (and components included therein) may be considered as being included in an electrolyte subsystem 130. As such, the electrolyte subsystem 130 may supply one or more electrolytes to the redox flow battery cell 18 (and components included therein).

Referring now to FIGS. 2A and 2B, perspective views 200 and 250 are respectively shown, each of the perspective views 200 and 250 depicting a rebalancing cell 202 for a redox flow battery system, such as redox flow battery system 10 of FIG. 1. In an exemplary embodiment, the rebalancing cell 202 may include a stack of internally shorted electrode assemblies, such as the electrode assembly described in detail below with reference to FIG. 3, which may drive an electrolyte rebalancing reaction by promoting contact between $H_2$ gas and an electrolyte from positive or negative electrode compartments of a redox flow battery, such as the redox flow battery cell 18 of FIG. 1, at catalytic surfaces of negative electrodes of the stack of internally shorted electrode assemblies. Accordingly, the rebalancing cell 202 may be one or both of the rebalancing reactors 80 and 82 of FIG. 1. A set of reference axes 201 is provided for describing relative positioning of the components shown and for comparison between the views of FIGS. 2A-4B, 6A, 6B, 9A, and 9B, the axes 201 indicating an x-axis, a y-axis, and a z-axis. As further shown in dashing in FIGS. 2A, 2B, and 6A, an additional axis g may be parallel with a direction of gravity (e.g., in a positive direction along the axis g) and a vertical direction (e.g., in a negative direction along the axis g and opposite to the direction of gravity).

A number of rebalancing cells 202 included in the redox flow battery system and a number of electrode assemblies included in the stack of internally shorted electrode assemblies are not particularly limited and may increase to accommodate correspondingly higher performance applications. For example, a 75 kW redox flow battery system may include two rebalancing cells 202 including a stack of 20 electrode assemblies (e.g., a stack of 19 bipolar assemblies with 2 end plates positioned at opposite ends of the stack).

As shown, the stack of internally shorted electrode assemblies may be removably enclosed within an external cell enclosure (e.g., housing) 204. Accordingly, in some examples, the cell enclosure 204 may include a top cover removably affixed to an enclosure base, such that the top cover may be temporarily removed to replace or diagnose one or more electrode assemblies of the stack of internally shorted electrode assemblies. In additional or alternative examples, the cell enclosure 204, depicted in FIGS. 2A and 2B as a rectangular prism, may be molded to be clearance fit against other components of the redox flow battery system such that the rebalancing cell 202 may be in face-sharing contact with such components. In some examples, the cell enclosure 204 may be composed of a material having a low electrical conductivity, such as a plastic or other polymer, so as to reduce undesirable shorting events.

The cell enclosure 204 may further be configured to include openings or cavities for interfacial components of the rebalancing cell 202. For example, the cell enclosure 204 may include a plurality of inlet and outlet ports configured to fluidically couple to other components of the redox flow battery system. In one example, and as shown, the plurality of inlet and outlet ports may include polypropylene (PP) flange fittings fusion welded to PP plumbing.

In an exemplary embodiment, the plurality of inlet and outlet ports may include an electrolyte inlet port 206 for flowing the electrolyte into the cell enclosure 204 and an electrolyte outlet port 208 for expelling the electrolyte from the cell enclosure 204. In one example, the electrolyte inlet port 206 may be positioned on an upper half of the cell enclosure 204 and the electrolyte outlet port 208 may be positioned on a lower half of the cell enclosure 204 (where the upper half and the lower half of the cell enclosure 204 are separated along the z-axis by a plane parallel with each of the x- and y-axes). Accordingly, the electrolyte outlet port 208 may be positioned lower than the electrolyte inlet port 206 with respect to the direction of gravity (e.g., along the axis g).

Specifically, upon the electrolyte entering the cell enclosure 204 via the electrolyte inlet port 206, the electrolyte may be distributed across the stack of internally shorted electrode assemblies, gravity fed through the stack of electrode assemblies, wicked up (e.g., against the direction of gravity) through positive electrodes of the stack of internally shorted electrode assemblies to react at the catalytic surfaces of the negative electrodes in a cathodic half reaction, and expelled out of the cell enclosure 204 via the electrolyte outlet port 208. To assist in the gravity feeding of the electrolyte and increase a pressure drop thereof, the rebalancing cell 202 may further be tilted or inclined with respect to the direction of gravity via a sloped support 220 coupled to the cell enclosure 204. In some examples, tilting of the cell enclosure 204 in this way may further assist in electrolyte draining of the rebalancing cell 202 (e.g., during an idle mode of the redox flow battery system) and keep the catalytic surfaces relatively dry (as the catalytic surfaces may corrode after being soaked in the electrolyte for a sufficient duration, in some examples).

As shown, the sloped support 220 may tilt the cell enclosure 204 at an angle 222 such that planes of electrode sheets of the stack of internally shorted electrode assemblies are inclined with respect to a lower surface (not shown) on which the sloped support 220 rests, at the angle 222. In some examples, the angle 222 (e.g., of the cell enclosure 204 with respect to the lower surface) may be between 0° and 30°. In embodiments wherein the angle 222 is substantially 0°, the rebalancing cell 202 may still function, though tilting the cell enclosure 204 by an angle greater than 0° may allow the pressure drop to be greater and for electrolyte crossover to the negative electrodes to be reduced. In some examples, the angle 222 may be between 2° and 30°. In some examples, the angle 222 may be between 2° and 20°. In one example, the angle 222 may be about 8°. Accordingly, the pressure drop of the electrolyte upon entering the cell enclosure 204, e.g., through the electrolyte inlet port 206, may be increased by increasing the angle 222 and decreased by decreasing the angle 222. Further aspects of the sloped support 220 are described in greater detail below with reference to FIGS. 9A and 9B.

Additionally or alternatively, one or more support rails 224 may be coupled to the upper half of the cell enclosure 204 (e.g., opposite from the sloped support 220). In some examples, and as shown in the perspective view 200 of FIG. 2A, the one or more support rails 224 may be tilted with respect to the cell enclosure 204 at the angle 222 such that the one or more support rails 224 may removably fasten the rebalancing cell 202 to an upper surface above and parallel with the lower surface. In this way, and based on geometric considerations, the z-axis may likewise be offset from the axis g at the angle 222 (e.g., the cell enclosure 204 may be tilted with respect to a vertical direction opposite the direction of gravity by the angle 222, as shown in FIGS. 2A and 2B). In some examples, gravity feeding of the electrolyte through the rebalancing cell 202 may further be assisted by positioning the rebalancing cell 202 above an electrolyte storage tank (e.g., the multi-chambered electrolyte storage tank 110 of FIG. 1) of the redox flow battery system with respect to the vertical direction opposite to the direction of gravity. Further aspects of the electrolyte flow will be discussed in greater detail below with reference to FIGS. 6A-7B.

As further shown, the electrolyte outlet port 208 may include a plurality of openings in the cell enclosure 204 configured to expel at least a portion of the electrolyte (each of the plurality of openings including the PP flange fitting fusion welded to PP plumbing). For instance, in FIGS. 2A and 2B, the electrolyte outlet port 208 is shown including five openings. In this way, the electrolyte may be evenly distributed across the stack of internally shorted electrode assemblies and may be expelled from the cell enclosure 204 with substantially unimpeded flow ("substantially" may be used herein as a qualifier meaning "effectively"). In other examples, the electrolyte outlet port 208 may include more than five openings or less than five openings. In one example, the electrolyte outlet port 208 may include a single opening. In additional or alternative examples, the electrolyte outlet port 208 may be positioned beneath the cell enclosure 204 with respect to the z-axis (e.g., on a face of the cell enclosure 204 facing a negative direction of the z-axis).

The electrolyte inlet port 206 and the electrolyte outlet port 208 may be positioned on the cell enclosure 204 based on a flow path of the electrolyte through the stack of internally shorted electrode assemblies (e.g., from the electrolyte inlet port 206 to the electrolyte outlet port 208 and inclusive of channels, passages, plenums, wells, etc. within the cell enclosure 204 fluidically coupled to the electrolyte inlet port 206 and the electrolyte outlet port 208). In some examples, and as shown, the electrolyte inlet port 206 and the electrolyte outlet port 208 may be positioned on adjacent sides of the cell enclosure 204 (e.g., faces of the cell enclosure 204 sharing a common edge). In other examples, the electrolyte inlet port 206 and the electrolyte outlet port 208 may be positioned on opposite sides of the cell enclosure 204. In other examples, the electrolyte inlet port 206 and the electrolyte outlet port 208 may be positioned on the same side of the cell enclosure 204.

In some examples, the electrolyte inlet port 206 may be positioned on a face of the cell enclosure 204 facing a negative direction of the x-axis. In additional or alternative examples, the electrolyte inlet port 206 may be positioned on a face of the cell enclosure 204 facing a positive direction of the x-axis. In one example, and as shown, one opening of the electrolyte inlet port 206 may be positioned on the face of the cell enclosure 204 facing the negative direction of the x-axis and another opening of the electrolyte inlet port 206 may be positioned on the face of the cell enclosure 204 facing the positive direction of the x-axis.

In some examples, the plurality of inlet and outlet ports may further include a hydrogen gas inlet port 210 for flowing the H$_2$ gas into the cell enclosure 204 and a hydrogen gas outlet port 212 (as shown in FIG. 2B) for expelling

the $H_2$ gas from the cell enclosure 204. In one example, and as shown, each of the hydrogen gas inlet port 210 and the hydrogen gas outlet port 212 may be positioned on the lower half of the cell enclosure 204 (e.g., at a lowermost electrode assembly of the stack of internally shorted electrode assemblies along the z-axis). In another example, each of the hydrogen gas inlet port 210 and the hydrogen gas outlet port 212 may be positioned on the upper half of the cell enclosure 204 (e.g., at an uppermost electrode assembly of the stack of internally shorted electrode assemblies along the z-axis). In yet another example, the hydrogen gas inlet port 210 may be positioned on the lower half of the cell enclosure 204 and the hydrogen gas outlet port 212 may be positioned on the upper half of the cell enclosure 204. In such an example, the hydrogen gas inlet port 210 may be positioned lower than the hydrogen gas outlet port 212 with respect to the direction of gravity (e.g., along the axis g).

Specifically, upon the $H_2$ gas entering the cell enclosure 204 via the hydrogen gas inlet port 210, the $H_2$ gas may be distributed across and through the stack of internally shorted electrode assemblies via forced convection (e.g., induced by flow field configurations of respective flow field plates, as discussed in greater detail below with reference to FIGS. 5A-5E and 8A-8D) and decomposed at the catalytic surfaces of the negative electrodes in an anodic half reaction. However, in some examples, excess, unreacted $H_2$ gas may remain in the rebalancing cell 202 following contact with the catalytic surfaces. In some examples, at least a portion of the $H_2$ gas which has not reacted at the catalytic surfaces may pass into the electrolyte. To avoid undesirable pressure buildup and thereby prevent electrolyte pooling on the positive electrodes and concomitant electrolyte flooding of the negative electrodes in such examples, the plurality of inlet and outlet ports may further include a pressure release outlet port 214 (as shown in FIG. 2A) to expel unreacted $H_2$ gas from the electrolyte. Further, in some examples, the hydrogen gas outlet port 212 may be configured to expel at least a portion of the $H_2$ gas which has not reacted at the catalytic surfaces and that has not flowed through the negative electrodes into the electrolyte. Further aspects of the $H_2$ gas flow will be discussed in greater detail below with reference to FIGS. 4A-5E.

The hydrogen gas inlet port 210 and the hydrogen gas outlet port 212 may be positioned on the cell enclosure 204 based on a flow path of the $H_2$ gas through the stack of internally shorted electrode assemblies. For example, the flow path may be from the hydrogen gas inlet port 210 to the hydrogen gas outlet port 212 (when included) and inclusive of channels, passages, plenums, etc., within the cell enclosure 204 and fluidically coupled to the hydrogen gas inlet port 210 and the hydrogen gas outlet port 212 (when included). In some examples, and as shown, the hydrogen gas inlet port 210 and the hydrogen gas outlet port 212 may be positioned on opposite sides of the cell enclosure 204. In other examples, the hydrogen gas inlet port 210 and the hydrogen gas outlet port 212 may be positioned on adjacent sides of the cell enclosure 204. In other examples, the hydrogen gas inlet port 210 and the hydrogen gas outlet port 212 may be positioned on the same side of the cell enclosure 204. Further, though the hydrogen gas inlet port 210 is shown in FIGS. 2A and 2B as being positioned on the face of the cell enclosure 204 facing the negative direction of the x-axis and the hydrogen gas outlet port 212 is shown in FIGS. 2A and 2B as being positioned on the face of the cell enclosure 204 facing the positive direction of the x-axis, in other examples, the hydrogen gas inlet port 210 may be positioned on the face of the cell enclosure 204 facing the positive direction of the x-axis and the hydrogen gas outlet port 212 may be positioned on the face of the cell enclosure 204 facing the negative direction of the x-axis.

In one example, the hydrogen gas inlet port 210, the hydrogen gas outlet port 212, the electrolyte inlet port 206, and the electrolyte outlet port 208 may be positioned on the cell enclosure 204 in a crosswise configuration. The crosswise configuration may include the hydrogen gas outlet port 212 and the electrolyte inlet port 206 being positioned on different sides (e.g., faces) of the upper half of the cell enclosure 204 and the hydrogen gas inlet port 210 and the electrolyte outlet port 208 being positioned on different sides of the lower half of the cell enclosure 204.

In other examples, no hydrogen gas outlet port 212 may be present for expelling $H_2$ gas which has not reacted at the catalytic surfaces of the negative electrodes and which has not flowed through the negative electrodes into the electrolyte. In such examples, however, the pressure release outlet port 214 for expelling unreacted $H_2$ gas from the electrolyte may still be present, and the unreacted $H_2$ gas may only be expelled from the cell enclosure 204 after flowing through the negative electrodes into the electrolyte and through the pressure release outlet port 214. Exemplary rebalancing cell configurations lacking the hydrogen gas outlet port 212, whether or not including the pressure release outlet port 214, may be referred to as "dead ended configurations." In dead ended configurations, substantially all of the $H_2$ gas may be forced into contact with the catalytic surfaces of the negative electrodes, whereat the Hz gas may either decompose via the anodic half reaction and/or the $H_2$ gas may enter the electrolyte after passing through the negative electrodes (e.g., without reacting at catalytic surfaces thereof).

Referring now to FIG. 3, an exploded view 300 depicting an electrode assembly 302 for a rebalancing cell, such as the rebalancing cell 202 of FIGS. 2A and 2B, is shown. Accordingly, the electrode assembly 302 may be internally shorted (e.g., electric current flowing through the electrode assembly 302 is not channeled through an external load). In an exemplary embodiment, the electrode assembly 302 may be included in a stack of electrode assemblies of like configuration in a cell enclosure so as to form the rebalancing cell. The electrode assembly 302 may include a plate 304 with an activated carbon foam 306, a positive electrode 308 (also referred to herein as a "cathode" in certain examples), and a negative electrode 310 (also referred to herein as an "anode" in certain examples) sequentially stacked thereon.

The electrode assembly 302 may be positioned within the rebalancing cell so as to receive an electrolyte through the carbon foam 306, wherefrom the electrolyte may enter pores of the positive electrode 308 via capillary action and come into contact with the negative electrode 310. The electrode assembly 302 may further be positioned within the rebalancing cell so as to receive $H_2$ gas across a catalytic surface of the negative electrode 310 opposite to the positive electrode 308 via convection. The convection of the $H_2$ gas across the catalytic surface may be assisted by a flow field plate (not shown at FIG. 3) interfacing with the catalytic surface. Upon decomposition of the $H_2$ gas at the catalytic surface via an anodic half reaction, protons and electrons may flow to an interface of the negative electrode 310 and the positive electrode 308, whereat ions in the electrolyte may be reduced via a cathodic half reaction (e.g., $Fe^{3+}$ may be reduced to $Fe^{2+}$). In this way, the electrode assembly 302 may be configured for electrolyte rebalancing for a redox flow battery, such as the redox flow battery cell 18 of FIG. 1, fluidically coupled to the rebalancing cell including the electrode assembly 302.

In some examples, the plate 304 may be composed of a material having a low electrical conductivity, such as a plastic or other polymer, so as to reduce undesirable shorting events. Accordingly, in one example, the plate 304 may be formed from the same material as the cell enclosure 204 of FIGS. 2A and 2B.

As shown, the plate 304 may include a plurality of inlets and outlets therethrough. For example, the plurality of inlets and outlets may include an electrolyte outlet channel section 316, a hydrogen gas inlet channel section 318a, and a hydrogen gas outlet channel section 318b. Specifically, the plate 304 may include the electrolyte outlet channel section 316 for directing the electrolyte out of the rebalancing cell, the hydrogen gas inlet channel section 318a for directing the Hz gas into the rebalancing cell and across the negative electrode 310, and the hydrogen gas outlet channel section 318b for directing the $H_2$ gas out of the rebalancing cell. The plate 304 may further include an electrolyte inlet well 312 for receiving the electrolyte at the electrode assembly 302, the electrolyte inlet well 312 fluidically coupled to a plurality of electrolyte inlet passages 314a set into a berm 314b positioned adjacent to the carbon foam 306 for distributing the received electrolyte across the carbon foam 306. In some examples, the electrolyte inlet well 312 may receive the electrolyte from an electrolyte inlet port (e.g., the electrolyte inlet port 206 of FIGS. 2A and 2B) fluidically coupled thereto (e.g., via an electrolyte inlet channel; not shown at FIG. 3), the electrolyte outlet channel section 316 may expel the electrolyte through an electrolyte outlet port (e.g., the electrolyte outlet port 208 of FIGS. 2A and 2B) fluidically coupled thereto, the hydrogen gas inlet channel section 318a may receive the $H_2$ gas from a hydrogen gas inlet port (e.g., the hydrogen gas inlet port 210 of FIGS. 2A and 2B) fluidically coupled thereto, and the hydrogen gas outlet channel section 318b may expel the $H_2$ gas through a hydrogen gas outlet port (e.g., the hydrogen gas outlet port 212 of FIGS. 2A and 2B) fluidically coupled thereto.

It will be appreciated that, though the hydrogen gas inlet channel section 318a is described herein as a section of a hydrogen gas inlet channel and the hydrogen gas outlet channel section 318b is described herein as a section of a hydrogen gas outlet channel, in other examples, the channel section 318b may be a section of a hydrogen gas inlet channel (e.g., for directing the Hz gas into the rebalancing cell and across the negative electrode 310 after receiving the Hz gas from the hydrogen gas inlet port) and the gas inlet channel section 318a may be a section of a hydrogen gas outlet channel (e.g., for directing the $H_2$ gas out of the rebalancing cell by expelling the $H_2$ gas through the hydrogen gas outlet port). In other examples, the rebalancing cell may be configured as a dead ended configuration and no hydrogen gas outlet port may be fluidically coupled to the hydrogen gas outlet channel section 318b. In such examples, the hydrogen gas outlet channel section 318b may direct the Hz gas back across the negative electrode 310 or the hydrogen gas outlet channel section 318b may instead be configured as another hydrogen gas inlet channel section (e.g., for directing a portion of the Hz gas into the rebalancing cell and across the negative electrode 310 after receiving the portion of the Hz gas from the hydrogen gas inlet port).

The plurality of inlets and outlets may be configured to ease electrolyte and $H_2$ gas flow throughout the rebalancing cell. As an example, a size of each of the hydrogen gas inlet channel section 318a and the hydrogen gas outlet channel section 318b may be selected to minimize a pressure drop therethrough, thereby aiding in flow distribution into each electrode assembly 302 of the stack of internally shorted electrode assemblies. As another example, a size of each electrolyte inlet passage 314a and a total number of the plurality of electrolyte inlet passages 314a relative to the berm 314b may be selected to induce a relatively small pressure drop to substantially evenly distribute electrolyte flow. In such an example, the selection of the size of each electrolyte inlet passage 314a and the total number of the plurality of electrolyte inlet passages 314a may be dependent on a number of factors specific to a given configuration of the rebalancing cell, such as a size of an electrolyte flow field and a desired electrolyte flow rate.

In additional or alternative examples, the electrolyte outlet channel section 316 may further be configured for distributing the electrolyte through multiple openings included in the electrolyte outlet port. For instance, in the exploded view 300 of FIG. 3, the electrolyte outlet channel section 316 is shown including two openings. In some examples, a number of openings included in the electrolyte outlet channel section 316 may be equal to a number of openings included in the electrolyte outlet port, such that the openings of the electrolyte outlet channel section 316 may respectively correspond to the openings of the electrolyte outlet port. In this way, the electrolyte may be evenly distributed across the electrode assembly 302 and may be expelled from the rebalancing cell with substantially unimpeded flow. In other examples, the electrolyte outlet channel section 316 may include more than two openings or less than two openings (e.g., a single opening).

Further, when the electrode assembly 302 is included in a stack of electrode assemblies, electrolyte outlet channel sections 316, hydrogen gas inlet channel sections 318a, and hydrogen gas outlet channel sections 318b may align to form a continuous electrolyte outlet channel, a continuous hydrogen gas inlet channel, and a continuous hydrogen gas outlet channel, respectively (as shown in FIGS. 4A, 4B, described below). In this way, the stack of electrode assemblies may be formed in a modular fashion, whereby any practical number of electrode assemblies 302 may be stacked and included in a rebalancing cell.

As further shown, a plurality of sealing inserts may be affixed (as used herein, "affix," "affixed," or "affixing" includes, but is not limited to, gluing, attaching, connecting, fastening, joining, linking, or securing one component to another component through a direct or indirect relationship) or otherwise coupled to the plate 304. As an example, the plurality of sealing inserts may include a hydrogen gas inlet channel seal insert 320a and a hydrogen gas outlet channel seal insert 320b for inducing flow of the $H_2$ gas across the negative electrode 310 by mitigating $H_2$ gas bypass. Specifically, the hydrogen gas inlet channel seal insert 320a and the hydrogen gas outlet channel seal insert 320b may be affixed or otherwise coupled adjacent to the hydrogen gas inlet channel section 318a and the hydrogen gas outlet channel section 318b, respectively, on a side of the plate 304 including the carbon foam 306, the positive electrode 308, and the negative electrode 310. In some examples, and as discussed in greater detail with reference to FIGS. 4A and 4B, the hydrogen gas inlet channel seal insert 320a and the hydrogen gas outlet channel seal insert 320b may be coincident with an x-y plane of the negative electrode 310 such that the hydrogen gas inlet channel seal insert 320a and the hydrogen gas outlet channel seal insert 320b may extend from a locus of affixation or coupling with the plate 304 and partially overlap the positive electrode 308.

As another example, the plurality of sealing inserts may further include each of a hydrogen gas inlet channel O-ring 322a and a hydrogen gas outlet channel O-ring 322b for respectively sealing an interface of the hydrogen gas inlet channel section 318a with a hydrogen gas inlet channel section of another electrode assembly and an interface of the hydrogen gas outlet channel section 318b with a hydrogen gas outlet channel section of another electrode assembly. Specifically, the hydrogen gas inlet channel O-ring 322a and the hydrogen gas outlet channel O-ring 322b may be affixed or otherwise coupled to the plate 304 so as to respectively circumscribe the hydrogen gas inlet channel section 318a and the hydrogen gas outlet channel section 318b.

As another example, the plurality of sealing inserts may further include an overboard O-ring 324 for sealing an interface of the electrode assembly 302 with another electrode assembly at outer edges thereof. Specifically, the overboard O-ring 324 may be affixed or otherwise coupled to the plate 304 so as to circumscribe each of the electrolyte inlet well 312, the plurality of electrolyte inlet passages 314a, the berm 314b, the electrolyte outlet channel section 316, the hydrogen gas inlet channel section 318a, and the hydrogen gas outlet channel section 318b.

The carbon foam 306 may be positioned in a cavity 326 of the plate 304 between the berm 314b and the electrolyte outlet channel section 316 along the y-axis and between the hydrogen gas inlet channel section 318a and the hydrogen gas outlet channel section 318b along the x-axis. Specifically, the carbon foam 306 may be positioned in face-sharing contact with a side of the plate 304 forming a base of the cavity 326. In some examples, the carbon foam 306 may be formed as a continuous monolithic piece, while in other examples, the carbon foam 306 may be formed as two or more carbon foam sections. In an exemplary embodiment, the carbon foam 306 may be conductive, permeable, and porous, providing a distribution field for the electrolyte being gravity fed therethrough from the plurality of electrolyte inlet passages 314a. In some examples, a pore distribution of the carbon foam 306 may be between 10 and 100 PPI. In one example, the pore distribution may be 30 PPI. In additional or alternative examples, a permeability of the carbon foam 306 may be between 0.02 and 0.5 $mm^2$. As such, each of the pore distribution and the permeability, in addition to an overall size, of the carbon foam 306 may be selected to target a relatively small pressure drop and thereby induce convection of the electrolyte from the carbon foam 306 into the positive electrode 308. For example, the pressure drop may be targeted to between 2 to 3 mm of electrolyte head rise.

In some examples, the carbon foam 306 may be replaced with a flow field plate configured to transport the electrolyte into the positive electrode 308 via convection induced by a flow field configuration of the flow field plate. For example, the flow field channels may be integrated into the flow field plate or into an insert of the flow field plate. An example of flow field geometry, when integrated into the flow field plate, is depicted in FIGS. 7A-7B, and described further below. Specifically, the flow field plate may be fluidically coupled to each of the plurality of electrolyte inlet passages 314a and the electrolyte outlet channel section 316. In one example, the flow field plate may be integrally formed in the plate 304 of the electrode assembly 302, positioned beneath the positive electrode 308 with respect to the z-axis. In other examples, the flow field plate may be a separate, removable component.

In some examples, and as described in detail below with reference to FIGS. 5A-5E, the flow field configuration may be an interdigitated flow field configuration embedded in the carbon foam 306 of the plate 304, a partially interdigitated flow field configuration, or a serpentine flow field configuration. In some examples, each electrode assembly 302 may interface with a flow field configuration of like configuration (e.g., interdigitated, partially interdigitated, serpentine, etc.)

as each other electrode assembly 302. In other examples, a number of different flow field configurations may be provided among the electrode assemblies 302 in the stack of electrode assemblies dependent upon a location of a given electrode assembly 302 in the rebalancing cell 202 of FIGS. 2A and 2B. In this way, the electrolyte may be directed from the electrolyte inlet port (e.g., the electrolyte inlet port 206 of FIGS. 2A and 2B) to the flow field plates respectively interfacing with the positive electrodes 308 in the stack of electrode assemblies, the flow field plates being configured in interdigitated flow field configurations, partially interdigitated flow field configurations, serpentine flow field configurations, or a combination thereof.

In certain examples, and as discussed in greater detail below with reference to FIGS. 4A and 4B, in addition to the carbon foam 306 being replaced with the flow field plate (also referred to herein as an "electrolyte flow field plate"), another flow field plate (also referred to herein as a "hydrogen gas flow field plate") may interface with the negative electrode 310 opposite from the positive electrode 308 with respect to the z-axis. However, in other examples, the electrolyte flow field plate may be included (e.g., replacing the carbon foam 306) and no hydrogen gas flow field plate may be present. In still other examples, the hydrogen gas flow field plate may be included (e.g., interfacing with the negative electrode 310) and no electrolyte flow field plate may be present.

The positive electrode 308 may be positioned in the cavity 326 in face-sharing contact with a side of the carbon foam 306 opposite from the plate 304 along the z-axis. In an exemplary embodiment, the positive electrode 308 may be a wicking conductive carbon felt, sponge, or mesh which may bring the electrolyte flowing through the carbon foam 306 into contact with the negative electrode 310 via capillary action. Accordingly, in some examples, the positive electrode 308 may be conductive and porous (though less porous than the carbon foam 306 in such examples). In one example, the electrolyte may be wicked into the positive electrode 308 when the porosity of the carbon foam 306 may be within a predefined range (e.g., below an upper threshold porosity so as to retain enough solid material to promote wicking up and into the positive electrode 308 and above a lower threshold porosity so as to not impede electrolyte flow through the carbon foam 306).

In an additional or alternative example, each of a sorptivity of the positive electrode 308 may decrease and a permeability of the positive electrode 308 may increase with an increasing porosity of the positive electrode 308 (e.g., at least until too little solid material of the positive electrode 308 remains to promote wicking of the electrolyte, such as when a threshold porosity of the positive electrode 308 is reached). In some examples, surfaces of the positive electrode 308 may be sufficiently hydrophilic for desirable rebalancing cell operation (e.g., by facilitating thorough electrolyte wetting and thereby forming an ionically conductive medium). In such examples, an overall hydrophilicity of the positive electrode 308 may be increased by coating or treating the surfaces thereof. Further, though at least some of the $H_2$ gas may pass into the positive electrode 308 in addition to a portion of the electrolyte wicked into the positive electrode 308, the positive electrode 308 may be considered a separator between a bulk of the $H_2$ gas thereabove and a bulk of the electrolyte therebelow.

In some examples, each of the positive electrode 308 and the negative electrode 310 may be formed as a continuous monolithic piece (e.g., as opposed to discrete particles or a plurality of pieces), such that interphase mass-transport losses across boundary layer films may be reduced when bringing the electrolyte into contact with the $H_2$ gas at the catalytic surfaces of the negative electrode 310, thereby promoting ion and proton movement. In contrast, a packed bed configuration including discretely packed catalyst particles may include mass-transport limiting boundary layer films surrounding each individual particle, thereby reducing a rate of mass-transport of the electrolyte from a bulk thereof to surfaces of the particles.

The negative electrode 310 may be positioned in the cavity 326 in face-sharing contact with a side of the positive electrode 308 opposite from the carbon foam 306 along the z-axis, such that a three-phase contact interface between the (wicked) electrolyte, the catalytic surfaces of the negative electrode 310, and the $H_2$ gas may be formed for proton (e.g., $H^+$) and ion movement ($H_3O^+$) therethrough. In tandem, the positive electrode 308 may reduce an overall electronic resistance by providing a conductive path for electrons to move into the electrolyte front and reduce $Fe^{3+}$ ions thereat.

In an exemplary embodiment, the negative electrode 310 may be a porous non-conductive material or a conductive carbon substrate with a metal catalyst coated thereon. In some examples, the porous non-conductive material may include polytetrafluoroethylene (PTFE), polypropylene, or the like. In some examples, the conductive carbon substrate may include carbon cloth or carbon paper. In some examples, the metal catalyst may include a precious metal catalyst. In some examples, the precious metal catalyst may include Pt. In additional or alternative examples, the precious metal catalyst may include Pd, Rh, Ru, Ir, Ta, or alloys thereof. In some examples, a relatively small amount (e.g., 0.2 to 0.5 wt%) of the precious metal catalyst supported on the conductive carbon substrate may be employed for cost considerations. In practice, however, the amount of the precious metal catalyst may not be particularly limited and may be selected based on one or more of a desired rate of reaction for the rebalancing cell and an expected lifetime of the rebalancing cell. Furthermore, alloys included in the precious metal catalyst may be utilized to reduce cost and increase a corrosion stability of the precious metal catalyst. For example, 10% addition of Rh to Pt may reduce corrosion of Pt by $Fe^{3+}$ by over 98%. In other examples, the metal catalyst may include a non-precious metal catalyst selected for stability in ferric solution and other such acidic environments (e.g., molybdenum sulfide). In one example, the negative electrode 310 may include carbon cloth coated with 1.0 mg/cm$^2$ Pt and may include a microporous layer bound with a polytetrafluoroethylene (PTFE) binder (e.g., for hydrophobicity). Indeed, inclusion of the PTFE binder may increase a durability of rebalancing cell performance over extended durations relative to electrode assemblies formed using other binders.

In some examples, such as when the precious metal catalyst includes Pt, soaking of the negative electrode 310 may eventually result in corrosion of the precious metal catalyst. In other examples, and as discussed in greater detail above with reference to FIGS. 2A and 2B, the electrode assembly 302 (along with the stack of electrode assemblies and the entire rebalancing cell) may be tilted or inclined with respect to a surface on which the rebalancing cell rests (e.g., the z-axis may be non-parallel with a direction of gravity) such that the precious metal catalyst may remain relatively dry as flow of the electrolyte is drawn through the carbon foam 306 toward the electrolyte outlet channel section 316 via gravity feeding. Thus, in some examples, the electrode assembly 302 may either be horizontal or inclined with respect to the surface on which the rebalancing cell rests at an angle of between 0° and 30°.

In an exemplary embodiment, the electrode assembly 302, including each of the carbon foam 306, the positive electrode 308, and the negative electrode 310, may be under compression along the z-axis, with the positive electrode 308 having a greater deflection than the carbon foam 306 and the negative electrode 310 under a given compressive pressure. Accordingly, a depth of the cavity 326 may be selected based on a thickness of the carbon foam 306, a thickness of the positive electrode 308, a desired compression of the positive electrode 308, and a thickness of the negative electrode 310. Specifically, the depth of the cavity 326 may be selected to be greater than a lower threshold depth of a sum of the thickness of the carbon foam 306 after substantially complete compression thereof and the thickness of the positive electrode 308 after substantially complete compression thereof (to avoid overstressing and crushing of the carbon foam 306, which may impede electrolyte flow) and less than an upper threshold depth of a sum of the thickness of the carbon foam 306 and the thickness of the positive electrode 308 (to avoid zero compression of the positive electrode 308 and possibly a gap, which may result in insufficient contact of the H$_2$ gas and the electrolyte).

For instance, in an example wherein the thickness of the carbon foam 306 is 6 mm, the thickness of the positive electrode 308 is 3.4 mm, the desired compression of the positive electrode 308 is 0.4 mm (so as to achieve a desired compressive pressure of 0.01 MPa), and the thickness of the negative electrode 310 is 0.2 mm, the depth of the cavity 326 may be 9.2 mm (= 3.4 mm + 6 mm + 0.2 mm - 0.4 mm). As another example, the thickness of the carbon foam 306 may be between 2 and 10 mm, the thickness of the positive electrode 308 may be between 1 and 10 mm, the desired compression of the positive electrode 308 may be between 0 and 2.34 mm (so as to achieve the desired compressive pressure of 0 to 0.09 MPa), and the thickness of the negative electrode 310 may be between 0.2 and 1 mm, such that the depth of the cavity 326 may be between 0.86 and 21 mm. In additional or alternative examples, the thickness of the positive electrode 308 may be 20% to 120% of the thickness of the carbon foam 306. In one example, the thickness of the positive electrode 308 may be 100% to 110% of the thickness of the carbon foam 306. In one example, the depth of the cavity 326 may further depend upon a crush strength of the carbon foam 306 (e.g., the depth of the cavity 326 may be increased with decreasing crush strength).

For instance, a foam crush factor of safety (FOS) may be 5.78 when the depth of the cavity 326 is 9.2 mm (e.g., when the desired compression of the positive electrode is 0.4 mm). The foam crush FOS may have a minimum value of 0.34 in some examples, where foam crush FOS values less than 1 may indicate that at least some crushing is expected. In some examples, the crush strength of the carbon foam 306 may be reduced by heat treatment of the carbon foam 306 during manufacturing thereof (from 0.08 MPa to 0.03 MPa, in one example). It will be appreciated that the electrode assembly 302 may be configured such that the depth of the cavity 326 is as low as possible (e.g., within the above constraints), as generally thinner electrode assemblies 302 may result in a reduced overall size of the rebalancing cell and a reduced electrical resistance across the electrode assembly 302 (e.g., as the electrolyte flow may be closer to the negative electrode 310).

In this way, the electrode assembly 302 may include a sequential stacking of the carbon foam 306 and an interfacing pair of the positive electrode 308 and the negative electrode 310 being in face-sharing contact with one another and being continuously electrically conductive. Specifically, a first interface may be formed between the positive electrode 308 and the carbon foam 306 and a second interface may be formed between the positive electrode 308 and the negative electrode 310, the second interface being opposite to the first interface across the positive electrode 308, and each of the carbon foam 306, the positive electrode 308, and the negative electrode 310 may be electrically conductive. Accordingly, the electrode assembly 302 may be internally shorted, such that electric current flowing through the electrode assembly 302 may not be channeled through an external load.

In an exemplary embodiment, and as discussed above, forced convection may induce flow of the H$_2$ gas into the electrode assembly 302 and across the negative electrode 310 (e.g., via a flow field plate interfacing with the negative electrode 310; not shown at FIG. 3). Thereat, the H$_2$ gas may react with the catalytic surface of the negative electrode 310 via equation (4a) (e.g., the reverse reaction of equation (1)):

$$\tfrac{1}{2}H_2 \rightarrow H^+ + e^- \quad \text{(anodic half reaction)} \quad (4a)$$

The proton ($H^+$) and the electron ($e^-$) may be conducted across the negative electrode 310 and into the positive electrode 308. The electrolyte, directed through the electrode assembly 302 via the carbon foam 306, may be wicked into the positive electrode 308. At and near the second interface between the positive electrode 308 and the negative electrode 310, $Fe^{3+}$ in the electrolyte may be reduced via equation (4b):

$$Fe^{3+} + e^- \rightarrow Fe^{2+} \quad \text{(cathodic half reaction)} \quad (4b)$$

Summing equations (4a) and (4b), the electrolyte rebalancing reaction may be obtained as equation (4):

$$Fe^{3+} + \tfrac{1}{2}H_2 \rightarrow Fe^{2+} + H^+ \quad \text{(electrolyte rebalancing)} \quad (4)$$

Since the electrode assembly 302 is internally shorted, a cell potential of the electrode assembly 302 may be driven to zero as:

$$0 = (E_{pos} - E_{neg}) - (\eta_{act} + \eta_{mt} + \eta_{ohm}) \quad (7)$$

where $E_{pos}$ is a potential of the positive electrode 308, $E_{neg}$ is a potential of the negative electrode 310, $\eta_{act}$ is an activation overpotential, $\eta_{mt}$ is a mass transport overpotential, and $\eta_{ohm}$ is an ohmic overpotential. For the electrode assembly 302 as configured in FIG. 3, $\eta_{mt}$ and $\eta_{act}$ may be assumed to be negligible. Further, $\eta_{ohm}$ may depend on an overpotential $\eta_{electrolyte}$ of the electrolyte and an overpotential $\eta_{felt}$ of the carbon felt forming the positive electrode 308 as:

$$\eta_{ohm} = \eta_{electrolyte} + \eta_{felt} \quad (8)$$

Accordingly, performance of the electrode assembly 302 may be limited at least by an electrical resistivity $\sigma_{electrolyte}$ of the electrolyte and an electrical resistivity $\sigma_{felt}$ of the carbon felt. The electrical conductivity of the electrolyte and the electrical conductivity of the carbon felt may further depend on a resistance $R_{electrolyte}$ of the electrolyte and a resistance $R_{felt}$ of the carbon felt, respectively, which may be given as:

$$R_{electrolyte} = \sigma_{electrolyte} \times t_{electrolyte} / A_{electrolyte} \quad (9)$$

$$R_{felt} = \sigma_{felt} \times t_{felt} / A_{felt} \quad (10)$$

where $t_{electrolyte}$ is a thickness of the electrolyte (e.g., a height of the electrolyte front), $t_{felt}$ is a thickness of the carbon felt (e.g., the thickness of the positive electrode 308), $A_{electrolyte}$ is an active area of the electrolyte (front), and $A_{felt}$ is an active area of the carbon felt. Accordingly, the performance of the electrode assembly 302 may further be limited based on a front location of the electrolyte within the carbon felt and therefore the distribution of the electrolyte across the carbon foam 306 and an amount of the electrolyte wicked into the carbon felt forming the positive electrode 308.

After determining $R_{electrolyte}$ and $R_{felt}$, an electric current $I_{assembly}$ of the electrode assembly 302 may be determined as:

$$I_{assembly} = (E_{pos} - E_{neg}) / (R_{electrolyte} + R_{felt}) \quad (11)$$

and a rate $v_{rebalancing}$ of the electrolyte rebalancing reaction (e.g., the rate of reduction of $Fe^{3+}$) may further be determined as:

$$v_{rebalancing} = I_{assembly} / (nFA_{rebalancing}) \quad (12)$$

where n is a number of electrons flowing through the negative electrode 310, F is Faraday's constant, and $A_{rebalancing}$ is an active area of the electrolyte rebalancing reaction (e.g., an area of an interface between the electrolyte front and the negative electrode 310). As an example, for an uncompressed carbon felt having $t_{felt}$ = 3 mm, $v_{rebalancing}$ may have a maximum value of 113 mol/m$^2$hr.

Referring now to FIGS. 4A and 4B, a cross-sectional view 400 and a magnified inset view 450 are respectively shown, each of the cross-sectional view 400 and the magnified inset view 450 depicting exemplary aspects of H$_2$ gas flow within the rebalancing cell 202. Specifically, the magnified inset view 450 magnifies a portion of the cross-sectional view 400 delimited by a dashed ellipse 410. As shown in FIGS. 4A and 4B, the rebalancing cell 202 may include an electrode assembly stack 402 formed as a stack of individual electrode assemblies 302 aligned such that the hydrogen gas inlet channel section 318a of each electrode assembly 302 forms a continuous hydrogen gas inlet channel 404 with the hydrogen gas inlet channel section 318a of each other electrode assembly 302. A hydrogen gas inlet plenum 406 may further be included in the hydrogen gas inlet channel 404, the hydrogen gas inlet plenum 406 fluidically coupling the hydrogen gas inlet channel 404 to the hydrogen gas inlet port 210. Respective hydrogen gas inlet channel O-rings 322a and overboard O-rings 324 may seal the hydrogen gas inlet channel 404 at interfaces between pairs of the electrode assemblies 302. It will be appreciated that cut portions of the rebalancing cell 202 are depicted in the cross-sectional view 400 and the magnified inset view 450 for detail, and that additional features of the rebalancing cell 202 (e.g., shown in FIGS. 2A and 2B) may not be depicted. Further, it will be appreciated that greater or fewer electrode assemblies 302 may be included in the electrode assembly stack 402 than shown in the cross-sectional view 400 for a given application (however, in some examples, scale-up performance may be substantially insensitive to H$_2$ gas flow at or below 50% H$_2$ gas utilization). Further, though structural features of the hydrogen gas inlet channel 404 and adjacent components are described in detail with reference to FIGS. 4A and 4B, it will be appreciated that structural features of a corresponding hydrogen gas outlet channel [e.g., formed by aligning a hydrogen gas outlet channel section 318b (see FIG. 3) of each electrode assembly 302] and adjacent components may be similarly configured (excepting that the hydrogen gas outlet channel may be dead ended or that a hydrogen gas outlet plenum included in the hydrogen gas outlet channel may be positioned opposite to the hydrogen gas inlet plenum 406 along the x- and z-axes).

As shown, and as indicated by arrows 408a, the H$_2$ gas may enter the hydrogen gas inlet channel 404 via the hydrogen gas inlet port 210, flowing first into the hydrogen gas inlet plenum 406 and then sequentially through the hydrogen gas inlet channel sections 318a in a positive direction along the z-axis. A size and a shape of the hydrogen gas inlet plenum 406 is not particularly limited, though a minimum size (e.g., a minimum volume, a minimum flow path width) of the hydrogen gas inlet plenum 406 may be selected to avoid relatively high flow velocity and pressure drop resulting in poor H$_2$ gas distribution. Further, the sloped support 220 may tilt the rebalancing cell 202 such that the hydrogen gas inlet channel 404 extends along the positive direction of the z-axis away from a direction of gravity (though not directly opposite to the direction of gravity, as discussed in detail above with reference to FIGS. 2A and 2B), and the H$_2$ gas may convect along the hydrogen gas inlet channel 404 along the positive direction of the z-axis.

As further shown, and as indicated by arrows 408b, at least some of the H$_2$ gas may flow from the hydrogen gas inlet channel 404 across the hydrogen gas inlet channel seal insert 320a of each respective electrode assembly 302 and into one or more hydrogen gas inlet passages 452 fluidically coupled to the hydrogen gas inlet channel 404 and interfacing with each respective electrode assembly 302. In one example, a surface of the hydrogen gas inlet channel seal insert 320a of a given electrode assembly 302 opposite to the one or more hydrogen gas inlet passages 452 of the given electrode assembly 302 may be coincident with the same x-y plane as a surface of the negative electrode 310 of the given electrode assembly 302 opposite to the one or more hydrogen gas inlet passages 452 of the given electrode assembly. Further, in some examples, the hydrogen gas inlet channel seal insert 320a of the given electrode assembly 302 may extend from a locus of affixation or coupling with the plate 304 of the given electrode assembly 302 and partially overlap the positive electrode 308 of the given electrode assembly 302 along the z-axis, thereby assisting in sealing the positive electrode 308 at an edge thereof.

In an exemplary embodiment, the one or more hydrogen gas inlet passages 452 may not be wholly included in any given electrode assembly 302 and instead may be formed as one or more gaps between adjacent pairs of electrode assemblies 302 in the electrode assembly stack 402. In some examples, the one or more hydrogen gas inlet passages 452 interfacing with a given electrode assembly 302 may be configured in a flow field configuration, such that the H$_2$ gas may be forcibly convected into the one or more hydrogen gas inlet passages 452 interfacing with the given electrode assembly 302. Specifically, the one or more hydrogen gas inlet passages 452 as configured in the flow field configuration may be formed from a flow field plate interfacing with the negative electrode 310 of the given electrode assembly 302. In one example, the flow field plate interfacing with the negative electrode 310 of the given electrode assembly 302 may be integrally formed in the plate 304 of an adjacent electrode assembly 302, positioned beneath the carbon foam 306 of the adjacent electrode assembly 302 with respect to the z-axis. In other examples, the flow field plate interfacing with the negative electrode 310 of the given electrode assembly 302 may be a separate, removable component. Additionally, a topmost flow field plate with respect to the z-axis may not be integrally formed with any electrode assembly 302 and may instead be included in the rebalancing cell 202 as either a separate, removable component or an integral feature of another component (e.g., the cell enclosure 204 of FIGS. 2A and 2B).

In some examples, and as described in detail below with reference to FIGS. 5A-5E, the flow field configuration may be an interdigitated flow field configuration, a partially interdigitated flow field configuration, or a serpentine flow field configuration. In some examples, each electrode assembly 302 may interface with a flow field configuration of like configuration (e.g., interdigitated, partially interdigitated, serpentine, etc.) as each other electrode assembly 302. In other examples, a number of different flow field configurations may be provided among the electrode assemblies 302 of the electrode assembly stack 402 (e.g., dependent upon a location of a given electrode assembly 302 in the rebalancing cell 202). In this way, the $H_2$ gas may be directed from the hydrogen gas inlet port 210 to the flow field plates respectively interfacing with the negative electrodes 310 of the electrode assembly stack 402, the flow field plates being configured in interdigitated flow field configurations, partially interdigitated flow field configurations, serpentine flow field configurations, or a combination thereof.

As further shown, and as indicated by arrows 408c, the $H_2$ gas may be convected across the negative electrodes 310 of the electrode assembly stack 402 (e.g., at a flow rate of 10 to 50 l/min per $m^2$ of the catalytic surfaces of the negative electrode 310). In some examples, the flow field plates interfacing with the respective electrode assemblies 302 may assist in the convection and distribute the $H_2$ gas across the respective negative electrodes 310. The $H_2$ gas may react with the catalytic surfaces of the negative electrodes 310 of the electrode assembly stack 402 in an anodic half reaction (see equation (4a)) to generate protons and electrons, which may then flow towards respective positive electrodes 308 and carbon foams 306. In some examples, at least some of the $H_2$ gas may remain unreacted and may flow across the negative electrodes 310 of the electrode assembly stack 402 along the arrows 408c as well.

Referring now to FIGS. 5A-5E, schematic views 500, 520, 540, and 560 are respectively shown, the schematic views 500, 520, 540, 560, and 580 respectively depicting an exemplary interdigitated flow field configuration, an exemplary partially interdigitated flow field configuration, a first exemplary serpentine flow field configuration, a second exemplary serpentine flow field configuration, and a linear flow field configuration. The interdigitated flow field configuration includes discontinuous electrolyte channels or passages, which promotes forced convection and mitigates flooding and gas diffusion limitations. The partially interdigitated flow field configuration includes continuous electrolyte channels with narrowed sections of the electrolyte channels located proximate to inlets and/or outlets of the electrolyte channels. This enables the flow field to have similar forced convection effects as the interdigitated flow field configuration but also allows continuous flow of electrolyte across the flow field. For example, the narrowed sections may be bypass channels providing low restriction paths for gas to exit the flow field (e.g., leave the flow field plate) while the electrolyte is still forced into the positive electrode. As a result, accumulation of gas in the electrolyte channels is mitigated which may otherwise lead to uneven fluid flow distribution and flooding at a negative side of an electrode assembly due to pressure accumulation at a positive side of the electrode assembly.

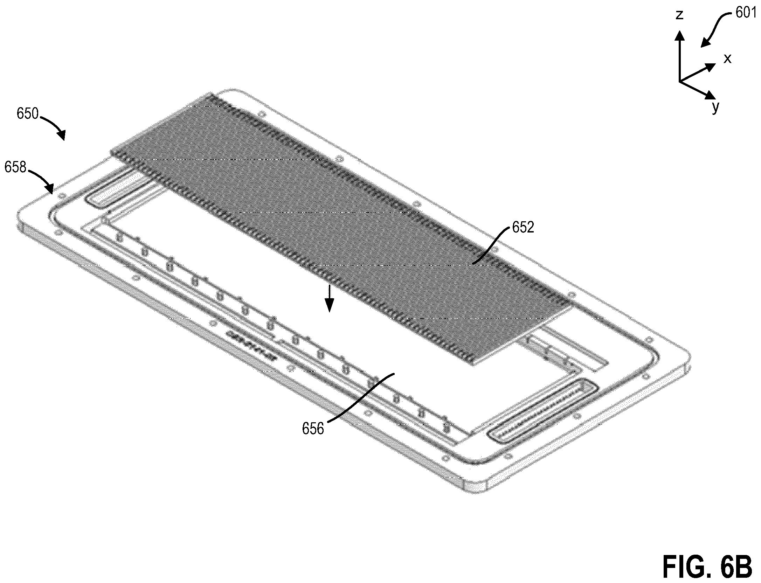

In one example, the flow field configurations shown in FIGS. 5A-5E may be formed in the carbon foam 306 of FIGS. 3A-4B, at a face of the carbon foam interfacing with the positive electrode 308. In an additional or alternative embodiment, as described further below with reference to FIGS. 6-7B, the carbon foam and separate plate may be replaced by a flow field plate with an integrated flow field having any of the exemplary flow field configurations of FIGS. 5A-5E for a given electrode assembly.

A set of reference axes 501 is provided for describing relative positioning of the components shown and for comparison between the views of FIGS. 5A-5E, the axes 501 indicating an x-axis, a y-axis, and a z-axis. It will be appreciated that the relative dimensions shown in FIGS. 5A-5E are exemplary and that other flow field configurations are considered within the scope of the present disclosure (e.g., having wider passages, a greater number of passages or bends therein, etc.). For example, passages forming the flow field configurations may include a series of steps therein (e.g., eight steps, though a total number of the steps may be increased or decreased to alter fluid diffusion and thereby enhance performance for a given application) incrementally extending in height from an inlet of the passage to an outlet or end of the passage (e.g., from substantially zero height to at or near a total depth of the passage).

As shown in the schematic view 500 of FIG. 5A, the exemplary interdigitated flow field configuration may include a inlet channel 506a and an outlet channel 506b. A fluid (e.g., $H_2$ gas, electrolyte) may enter the flow field through the first inlet channel 506a and parallel to the z-axis and flow into a plurality of interdigitated passages 502, along the x-axis as indicated by arrows 504. Depending on a geometry of the plurality of interdigitated passages 502, the fluid may initially encounter end walls 508 and may be forcibly convected over the end walls 508 parallel to the x-axis. Alternatively, the fluid may encounter the end walls 508 proximate to the outlet channel 506b and may similarly be forcibly convected over the end walls 508 after flowing through the passages.

For example, the fluid may flow unimpeded from the inlet channel 506a into a first passage 502a of the plurality of interdigitated passages 502. At an end of the first passage 502a proximate to the outlet channel 506b, the fluid may be forced to flow parallel to the z-axis over one of the end walls 508. In contrast, at a second passage 502b of the plurality of interdigitated passages 502, fluid from the inlet channel 506a may be forced over one of the end walls 508 (also along the z-axis) located proximate to the inlet channel 506a before flowing into the second passage 502b.

In some examples, when the exemplary interdigitated flow field configuration interfaces with a porous medium (such as the positive electrode 308 or the negative electrode 310 of FIGS. 3-4B), a portion of the fluid may pass into the porous medium after being forcibly convected over the end walls 508 (e.g., rather than passing from the inlet channel 506a to the outlet channel 506b). In one example, the portion of the fluid may be substantially all the fluid. As shown, each of the passages 502 may be open to (e.g., continuous with) the inlet channel 506a or the outlet channel 506b. However, in some examples, the outlet channel 506b may be fluidically coupled to the inlet channel 506a elsewhere. Accordingly, in one example, the outlet channel 506b may instead serve as an additional inlet channel for the fluid (e.g., the fluid may enter the flow field through each of the inlet channel 506a and the outlet channel 506b). In an additional or alternative example, the outlet channel for the fluid may not be either of the channels 506a, 506b. For instance, the outlet channel may be a pressure release outlet port, such as the pressure release outlet port 214 of FIG. 2A, through which the fluid may flow following passage of the fluid through the porous medium. In certain examples wherein the fluid is $H_2$ gas and the porous medium is the negative electrode 310 of FIGS. 3-4B, the fluid may sequentially pass through the negative electrode 310, enter flowing electrolyte on the other side of the negative electrode 310, and be expelled via the pressure release outlet port 214 (fluidically coupled to the flowing electrolyte).

As shown in the schematic view 520 of FIG. 5B, the exemplary partially interdigitated flow field configuration may include an inlet channel 526a and an outlet channel 526b. A fluid (e.g., $H_2$ gas, electrolyte) may flow enter the flow field through the inlet channel 526a parallel to the z-axis, and flow through a plurality of partially interdigitated passages 522 along the x-axis, as indicated by arrows 524. In general, the fluid may travel in a similar manner as described above with respect to FIG. 5A, except at constricted sections 523 of the plurality of partially interdigitated passages 522 which bisect end walls 528.

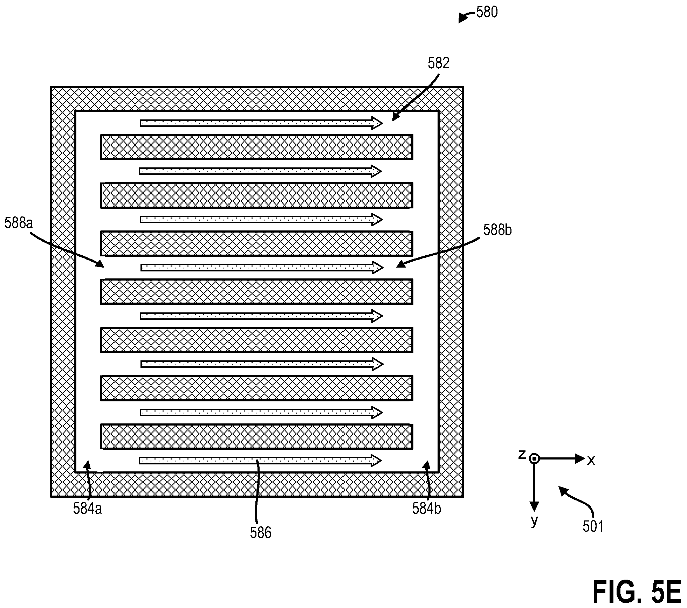

In some examples, when the exemplary partially interdigitated flow field configuration interfaces with a porous medium (such as the positive electrode 308 or the negative electrode 310 of FIGS. 3-4B), and though each of the plurality of partially interdigitated passages 522 may be open to (e.g., continuous with) each of the inlet channel 526a and the outlet channel 526b, a portion of the fluid may pass into the porous medium after being forcibly convected over the end walls 528. For example, the portion may be greater than 50% of the fluid. While the portion of the fluid may be forced into the porous medium, the presence of the constricted sections 522a may allow gas to diffuse out of the fluid and continue through the plurality of interdigitated passages 522 to the outlet channel 526b. A thickness of each of the constricted sections 522a may be variable, ranging from a greatest thickness of a corresponding passage 522 (e.g., a straight-channel flow field configuration, wherein the inlets are substantially unconstructed, as shown in FIG. 5E) to substantially zero thickness (e.g., a fully interdigitated flow field configuration, such as the exemplary interdigitated flow field configuration of FIG. 5A).

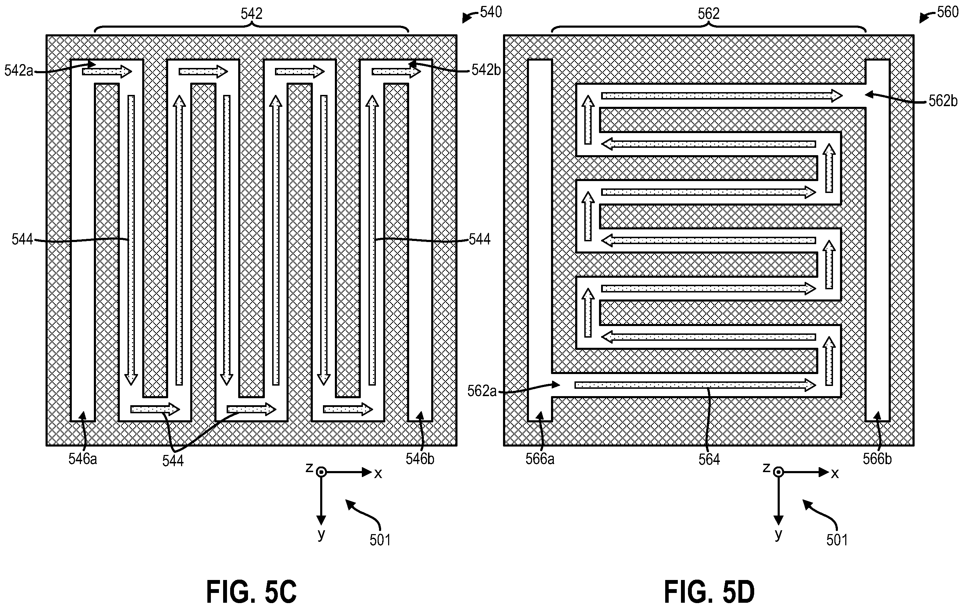

As shown in the schematic view 540 of FIG. 5C, the first exemplary serpentine flow field configuration may include an inlet channel 546a and an outlet channel 546b. A fluid (e.g., $H_2$ gas, electrolyte) may flow through the inlet channel 546a parallel to the z-axis, wherefrom the fluid may be forcibly convected into an inlet 542a of a serpentine passage 542 of the first exemplary flow field configuration parallel to the x-axis. As indicated by arrows 544, the fluid may flow along the serpentine passage 542 parallel to the x- and y-axes, altering direction at 90° bends therein until the fluid is expelled from the outlet 542b of the serpentine passage 542 into the outlet channel 546b. As further shown, the first exemplary serpentine flow field configuration may include longer straight sections of the serpentine passage 542 parallel to the y-axis and shorter straight sections (e.g., bases of U-bends) of the serpentine passage 542 parallel to the x-axis. In additional or alternative examples, multiple serpentine passages 542 of like or similar configuration may fluidically couple the inlet channel 546a to the outlet channel 546b. In some examples, when the first exemplary serpentine flow field configuration interfaces with a porous medium (such as the positive electrode 308 or the negative electrode 310 of FIGS. 3-4B), and though the serpentine passage 542 may be open to each of the inlet channel 546a and the outlet channel 546b, substantially all of the fluid may pass into the porous medium after being forcibly convected into the serpentine passage 542 via the inlet 542a (e.g., rather than passing from the inlet channel 546a to the outlet channel 546b). In one example, however, the serpentine passage 542 may not include the outlet 542b and thus may not fluidically couple to the outlet channel 546b (e.g., such as when the first exemplary serpentine flow field configuration is dead ended).

As shown in the schematic view 560 of FIG. 5D, the second exemplary serpentine flow field configuration may include an inlet channel 566a and an outlet channel 566b. A fluid (e.g., $H_2$ gas, electrolyte) may flow through the inlet channel 566a parallel to the z-axis, wherefrom the fluid may be forcibly convected into an inlet 562a of a serpentine passage 562 of the second exemplary flow field configuration parallel to the x-axis. As indicated by arrows 564, the fluid may flow along the serpentine passage 562 parallel to the x- and y-axes, altering direction at 90° bends therein until the fluid is expelled from the outlet 562b of the serpentine passage 562 into the outlet channel 566b. As further shown, the second exemplary serpentine flow field configuration may include longer straight sections of the serpentine passage 562 parallel to the x-axis and shorter straight sections (e.g., bases of U-bends) of the serpentine passage 562 parallel to the y-axis. In additional or alternative examples, multiple serpentine passages 562 of like or similar configuration may fluidically couple the inlet channel 566a to the outlet channel 566b. In some examples, when the second exemplary serpentine flow field configuration interfaces with a porous medium (such as the positive electrode 308 or the negative electrode 310 of FIGS. 3-4B), and though the serpentine passage 562 may be open to each of the inlet channel 566a and the outlet channel 566b, substantially all of the fluid may pass into the porous medium after being forcibly convected into the serpentine passage 562 via the inlet 562a (e.g., rather than passing from the inlet channel 566a to the outlet channel 566b). In one example, the serpentine passage 562 may not include the outlet 562b and thus may not fluidically couple to the outlet channel 566b (e.g., such as when the second exemplary serpentine flow field configuration is dead ended).

Turning now to FIG. 5E, the schematic view 580 depicts the linear flow field configuration with a plurality of passages 582. The plurality of passages 582 extend linearly between an inlet channel 584a and an outlet channel 584b, with the plurality of passages 582 aligned parallel with one another and evenly spaced apart across the flow field, along the y-axis. A fluid (e.g., $H_2$ gas, electrolyte) may flow through the inlet channel 584a parallel to the z-axis, wherefrom the fluid may be forcibly convected into an inlet 588a of each of the plurality of passages 582. The fluid may proceed to flow through the plurality of passages 582 parallel with the x-axis, as indicated by arrows 586, until the fluid is expelled from the plurality of passages 582 at an outlet 588b of each of the plurality of passages 582 into the outlet channel 584b. In the outlet channel 584b, the fluid may flow parallel to the z-axis. In some examples, when the linear flow field configuration interfaces with a porous medium (such as the positive electrode 308 or the negative electrode 310 of FIGS. 3-4B), and though plurality of passages 582 may be open to each of the inlet channel 584a and the outlet channel 584b, substantially all of the fluid may pass into the porous medium after being forcibly convected into the plurality of passages 582 via the inlet 588a of each of the plurality of passages 582 (e.g., rather than passing from the inlet channel 584a to the outlet channel 584b). In one example, however, the plurality of passages 582 may not include the outlet 588b and thus may not fluidically couple to the outlet channel 584b (e.g., such as when the linear flow field configuration is dead ended).

As described above, a plate of an electrode assembly configured with a carbon foam, e.g., the plate 304 and the carbon foam 306 of FIGS. 3-4B, may be replaced with a flow field plate having integrated electrolyte channels. Use of the flow field plate with integrated electrolyte channels may reduce costs, provide a flow field plate less prone to breakage, and provide increased control over pressure losses. Example of flow field plates are depicted in FIGS. 6A-6B, which may be positioned in the electrode assembly in an analogous manner to a combination of the plate 304 and the carbon foam 306 as shown in FIG. 3. A set of references 601 are provided, indicating an x-axis, a y-axis, and a z-axis.

Turning first to FIG. 6A, a flow field plate 600 may be formed of a similar material as the plate 304 of FIGS. 3-4B, such as a plastic or other polymer. The flow field plate 600 may have a face 602, configured to interface with a positive electrode 604 (shown spaced away from the flow field plate 600), which is further in face-sharing contact with a negative electrode 606. The face 602 of the flow field plate 600 has a central region 608 in which a flow field 610, comprising a plurality of electrolyte channels or passages, may be formed. As an example, the flow field may be molded or machined into the central region 608 of the flow field plate 600 during manufacturing of the flow field plate 600.

Alternatively, as shown in FIG. 6B, a flow field plate 650 may be adapted with an insert 652 (shown spaced away from the flow field plate 650 in FIG. 6B) which may be positioned in a central region 656 of the flow field plate 650. The central region 656 may be an area in a face 658 configured to receive and couple to the insert 652. In such examples, the flow field may instead be molded or machined into a surface of the insert 652 facing a positive electrode, where the insert 652 may be formed of a chemically and physically compatible polymer such as polypropylene, polyethylene, polycarbonate, etc. The insert 652 may be coupled to the central region 656 via adhesive, welding, etc., or by compression when the flow field plate 650 is assembled in an electrode assembly. In examples where retrofitting an already existing plate with the flow field is desired, the insert 652 may be used to achieve analogous fluid flow and pressure control as the flow field plate 600 of FIG. 6A having the directly integrated flow field.

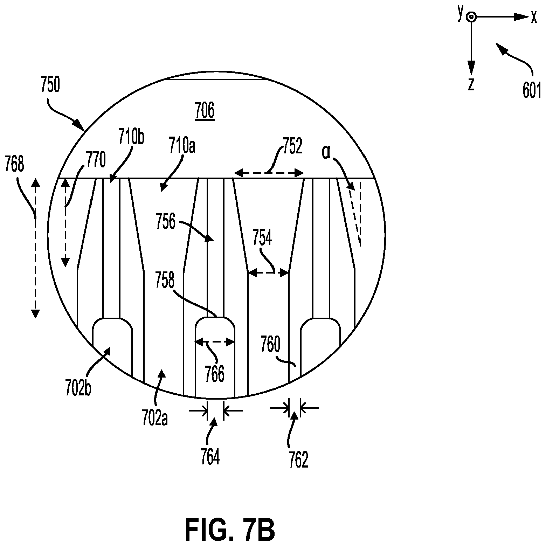

In some examples, the flow field of the flow field plate (e.g., the flow field plate 600 of FIG. 6A or the flow field plate 650 of FIG. 6B) may have a configuration similar to any of configurations depicted in FIGS. 5A-5E. Alternatively, in another example, a partially interdigitated flow field may be integrated into the flow field plate with tapered channels or passages shaped to control pressure at inlets and outlets of the tapered passages, as well as partial channels to drive escape of gas (e.g., $H_2$) from the flow field. As such, the flow field plate may be coupled to and interface with a positive electrode of an electrode assembly. An example of a positive interdigitated flow field (PIDFF) 700 with partially interdigitated passages that may be integrated directly into a surface of the flow field plate, or into a face of an insert for the flow field plate, is illustrated in FIG. 7A. A detailed view of an inlet region of the flow field is shown in FIG. 7B.

The PIDFF 700 includes a plurality of partially interdigitated passages 702 extending linearly across the PIDFF 700 parallel with the z-axis. Fluid (e.g., positive electrolyte, $H_2$ gas) flowing through an inlet channel 704 may be convected into a distribution manifold 706 that fluidically couples the inlet channel 704 to inlets 710 of the plurality of interdigitated passages 702, as indicated by arrows 708. The fluid may flow from the inlets 710 to outlets 712 of the plurality of partially interdigitated passages 702, as indicated by arrows 714, to be expelled into an outlet channel 716. Furthermore, the fluid may also flow along the positive y-axis into the positive electrode, as well as along the negative y-axis to return to the plurality of partially interdigitated passages 702 to exit the flow field through the outlets 712.

The plurality of interdigitated passages 702 includes two passage geometries, e.g., a first set of passages and a second set of passages, which are arranged in an alternating pattern along the x-axis. A first passage 702a of the first set of passages may have first inlets 710a that are tapered and first outlets 712a that are linear while a second passage 702b of the second set of passages may have second inlets 710b that are linear and second outlets 712b that are tapered. It will be appreciated that a geometry of the first inlets 710a may be similar to that of the second outlets 712b, but reversed in orientation, while a geometry of the second inlets 710b may be similar to that of the first outlets 712b. The inlets 710 of the plurality of partially interdigitated passages 702 are shown in greater detail in FIG. 7B.

An expanded view of a region 750 of the PIDFF 700 is depicted in FIG. 7B, showing details of the first inlets 710a and the second inlets 710b of the inlets 710. Each of the first inlets 710a has funnel-shaped geometry, with a diameter 752 at a mouth of the first inlets 710a that is wider than a diameter 754 at a neck of the first inlets 710a, the neck of the first inlets 710a being a merging region of each of the first inlets 710a with the first passage 702a. In other words, the diameter of one the first inlets 710a may be widest at an entrance to the first inlet 710a. Correspondingly, a diameter of each of the second outlets 712b (as shown in FIG. 7A) may be narrowest at an entrance (e.g., a neck) of each of the second outlets 712b and may widen towards an exit (e.g., a mouth) of the second outlets 712b. A diameter of the first passage 702a may be uniform between the first inlet 710a and the first outlet 712a and, similarly, a diameter of the second passage 702b may be uniform between the second inlet 710b and the second outlet 712b. As an example, the diameter 752 at the mouth of the inlets and outlets may 1.5 mm -5 mm and the diameter 754 at the neck of the inlets and outlets may vary depending on an angle of the funnel-shaped geometry. For example, an angle $\alpha$ of each side of the first inlets 710a and the second outlets 712b may form an angle of 5 to 20 degrees relative to the z-axis.

By configuring the first passage 702a with the first inlet 710a, an infiltration pressure of fluid entering the first passage 702a at the first inlet 710a may be reduced, e.g., relative to non-tapered inlets. The second outlets 712b of the second passage 702b, as shown in FIG. 7A, may similarly reduce an exit pressure of fluid leaving the second passage 702b. The tapered inlets and outlet may together maintain a low electrolyte pressure drop through the flow field plate. Decreasing the drop in electrolyte pressure may mitigate flooding of $H_2$ channels at a negative electrode of an electrode assembly incorporating the flow field plate.

The second inlets 710b (and the first outlets 712a) are formed of a partial channel 756 that strips gas (e.g., $H_2$) from the positive electrolyte, as the positive electrolyte flows through the partial channel 756. For example, the positive electrode may be positioned at an interface 758 between the partial channel 756 and the second passage 702b. In other words, the positive electrode (which may be formed of felt) may be positioned directly on top of the plurality of interdigitated passages 702 of the PIDFF 700. When the positive electrode is saturated with the fluid, a pressure for the gas in the fluid to penetrate into the positive electrode may increase (e.g., break-through pressure). Without the partial channel 756 present at both the second inlets 710b and the first outlets 712a, the gas may be trapped in the plurality of interdigitated passages 702 until the pressure rises enough to reach the break-through pressure. In such instances, the trapped gas may cause poor flow distribution and pressure accumulation at a positive side of the electrode assembly. The pressure accumulation may lead to flooding at a negative side of the electrode assembly in order to overcome (e.g. reach and/or exceed) the break-through pressure.

By incorporating the partial channel 756 at the inlets 710 and the outlets 712 of the plurality of partially interdigitated passages 702, a less restrictive path is provided for the gas to exit the flow field while the remaining fluid is forced to flow into the positive electrode. A reduced diameter of the partial channel 756 relative to the plurality of partially interdigitated passages 702 inhibits flow of the remaining fluid through the partial channel 756, a result of a higher infiltration pressure demanded for liquids than for gas at a given flow rate. The gas may therefore escape through the partial channel 756 while the remaining fluid is forcibly converted into the positive electrode, circumventing a drop in pressure across the flow field plate.

At the outlets 712 of the plurality of partially interdigitated passages 702, the first outlet 712a of the first passage 702a may include the interface 758 between the first passage 702a and the positive electrode and the partial channel 756. The second outlet 712b of the second passage 702b may have a similar funnel shape as the first inlet 710a. As such, flow of the positive electrolyte out of the first passage 702a may be forcibly convected into the positive electrode while gas escapes through the partial channel 756, as described above. At the second outlet 712b of the second passage 702b, widening of a diameter of the second outlet 712b may increase flow of positive electrolyte out of the second passage 702b, which may alleviate backpressure arising from surface tension effects. In this way, a combination of the configurations of the first passage 702a and the second passage 702b may drive flow of the positive electrolyte through the plurality of partially interdigitated passages 702 and into the positive electrode, where the flow maintains a small pressure drop across the flow field plate. Flooding of negative channels of a negative electrode of the electrode assembly may be circumvented as a result. Additionally, at least a portion of gases present in the positive electrolyte may be removed from the positive electrolyte as the positive electrolyte enters the plurality of partially interdigitated passages 702.

Dimensions of the plurality of partially interdigitated passages 702 may be sized to maximize the effects described above. For example, as shown in FIG. 7B, the plurality of partially interdigitated passages 702 may have channel depths (e.g., along the y-axis) of 2-10 mm. A thickness 762 of channel walls 760 of the plurality of partially interdigitated passages 702 may be 0.5 mm - 4 mm. The partial channel 756 may have a diameter 764 of 0.5 mm - 2 mm and each of the plurality of partially interdigitated passages 702 may have a diameter 766 of 1.5 mm - 5 mm. A length 768 (as defined along the z-axis) of the partial channel 756 may be 3 mm - 20 mm and a length 770 of the first inlet 710a and of the second outlet 712b may be 3 mm - 15 mm.

Referring now to FIG. 8, a flow chart of a method 800 for operating a rebalancing cell including a stack of internally shorted electrode assemblies (e.g., wherein electric current flowing through the stack of internally shorted electrode assemblies is not channeled through an external load) is shown. Specifically, the rebalancing cell may be implemented in a redox flow battery system for decreasing excess $H_2$ gas and rebalancing charge imbalances in an electrolyte therein. In an exemplary embodiment, the redox flow battery system may be the redox flow battery system 10 of FIG. 1 and the rebalancing cell may be the rebalancing cell 202 of FIGS. 2A and 2B. Accordingly, method 800 may be considered with reference to the embodiments of FIGS. 1-2B, alone or in combination with the embodiments and considerations of FIGS. 3-7B (though it may be understood that similar methods may be applied to other systems without departing from the scope of the present disclosure). For example, with method 800, at least some steps or portions of steps (e.g., involving receiving the Hz gas and the electrolyte for distribution at the rebalancing cell) may be carried out via the controller 88 of FIG. 1, and may be stored as executable instructions at a non-transitory storage medium (e.g., memory) communicably coupled to the controller 88. Further components described with reference to FIG. 8 may be examples of corresponding components of FIGS. 1-7B.

At 802, method 800 includes receiving the Hz gas and the electrolyte at the rebalancing cell via respective inlet ports thereof. The electrolyte may be received at the rebalancing cell via a first inlet port and the Hz gas may be received at the rebalancing cell via a second inlet port. In one example, the first inlet port being positioned above the second inlet port with respect to a direction of gravity.

At 804, method 800 includes distributing the $H_2$ gas and the electrolyte throughout the stack of internally shorted electrode assemblies. Specifically, the electrolyte may be distributed via an inlet manifold including a plurality of first inlet channels respectively coupled to the electrode assemblies of the stack of internally shorted electrode assemblies and the Hz gas may be distributed via a second inlet channel formed by the stack of internally shorted electrode assemblies and fluidically coupled to each electrode assembly of the stack of internally shorted electrode assemblies. In some examples, after distribution via the inlet manifold, the electrolyte may be distributed through first flow field plates respectively interfacing with positive electrodes of the stack of internally shorted electrode assemblies. In other examples, after distribution via the inlet manifold, the electrolyte may be distributed through activated carbon foams respectively interfacing with the positive electrodes. In some examples, after distribution via the second inlet channel, the $H_2$ gas may be distributed through second flow field plates respectively interfacing with negative electrodes of the stack of internally shorted electrode assemblies.

At 806, method 800 includes inducing flows (e.g., crosswise, parallel, or opposing flows) of the $H_2$ gas and the electrolyte to perform an electrolyte rebalancing reaction at the negative and positive electrodes of the stack of internally shorted electrode assemblies. The negative and positive electrodes may be distributed among the stack of internally shorted electrode assemblies in interfacing pairs of negative and positive electrodes. As discussed above, each positive electrode of the interfacing pairs of negative and positive electrodes may further interface with a respective activated carbon foam or a respective first flow field plate. In one example, the negative electrode may be a conductive carbon substrate having a Pt catalyst coated thereon and the positive electrode may be a carbon felt. In some examples, inducing flows of the $H_2$ gas and the electrolyte may include: (i) at 808, inducing flow of the $H_2$ gas across the negative electrodes of the stack of internally shorted electrode assemblies via convection (e.g., forced convection via the second flow field plates interfacing with the negative electrodes of the stack of internally shorted electrode assemblies); and (ii) at 810, inducing flow of the electrolyte across the positive electrodes of the stack of internally shorted electrode assemblies via one or more of gravity feeding (e.g., by tilting the rebalancing cell relative to a direction of gravity), capillary action (e.g., wicking up the electrolyte into the positive electrodes of the stack of internally shorted electrode assemblies), and convection (e.g., forced convection via the first flow field plates interfacing with the positive electrodes of the stack of internally shorted electrode assemblies). In one example, the flow of $H_2$ gas may be induced across the negative electrodes by convection and the flow of the electrolyte may be induced across the positive electrodes by each of gravity feeding and capillary action. Upon flowing the $H_2$ gas and the electrolyte across the negative and positive electrodes of the stack of internally shorted electrode assemblies, the electrolyte rebalancing reaction may be performed, including, at 812, reacting the $H_2$ gas with positively charged ions in the electrolyte to reduce the positively charged ions (see equation (4)).

At 814, method 800 includes expelling the electrolyte (having the reduced positively charged ions, e.g., a lower concentration of $Fe^{3+}$ than upon being received at the first inlet port at 802) and any unreacted $H_2$ gas from the rebalancing cell via outlet ports thereof. Specifically, at 816, the electrolyte may be expelled from the rebalancing cell via a first outlet port and, in some examples, at 818, the unreacted $H_2$ gas may be expelled from the rebalancing cell via a second outlet port. However, in other examples, the rebalancing cell may include a dead ended configuration for flowing the $H_2$ gas and no second outlet port may be included. In either case, at least some unreacted $H_2$ gas may flow through the negative electrodes of the stack of internally shorted electrode assemblies and into the electrolyte. Accordingly, expelling the unreacted Hz gas from the rebalancing cell may include, at 820, expelling the unreacted $H_2$ gas in the electrolyte via a pressure release outlet port (e.g., to prevent pressure from building up in the electrolyte and flooding the negative electrodes of the stack of internally shorted electrode assemblies).

In this way, a rebalancing cell including a stack of internally shorted electrode assemblies is provided for a redox flow battery. Specifically, flows of $H_2$ gas and a charge-imbalanced electrolyte from the redox flow battery may be provided to the rebalancing cell and induced across negative and positive electrodes of the stack of internally shorted electrode assemblies. In some examples, the positive electrodes may be in face-sharing contact with flow field plates configured with integrated channels or passages for flowing electrolyte therethrough. The electrolyte channels may be embedded directly into a face of the flow field plates or into an insert that can be coupled to the flow field plate. A geometry of the electrolyte channels may promote stripping of gas from positive electrolyte and reduced drop in pressure, which may arise from oxidation issues, across the flow field plate. Furthermore, by integrating the electrolyte channels into the flow field plate, rather than relying on a separate porous carbon foam, a cost of manufacturing and an assembly time of the rebalancing cell may be decreased, the electrode assemblies may be more robust to degradation, and more consistent performance of the rebalancing cell may be enabled.

FIGS. 2A-4B, and 6A-6B show example configurations with relative positioning of the various components. If shown directly contacting each other, or directly coupled, then such elements may be referred to as directly contacting or directly coupled, respectively, at least in one example. Similarly, elements shown contiguous or adjacent to one another may be contiguous or adjacent to each other, respectively, at least in one example. As an example, components laying in face-sharing contact with each other may be referred to as in face-sharing contact. As another example, elements positioned apart from each other with only a space there-between and no other components may be referred to as such, in at least one example. As yet another example, elements shown above/below one another, at opposite sides to one another, or to the left/right of one another may be referred to as such, relative to one another. Further, as shown in the figures, a topmost element or point of element may be referred to as a "top" of the component and a bottommost element or point of the element may be referred to as a "bottom" of the component, in at least one example. As used herein, top/bottom, upper/lower, above/below, may be relative to a vertical axis of the figures and used to describe positioning of elements of the figures relative to one another. As such, elements shown above other elements are positioned vertically above the other elements, in one example. As yet another example, shapes of the elements depicted within the figures may be referred to as having those shapes (e.g., such as being circular, straight, planar, curved, rounded, chamfered, angled, or the like). Further, elements shown intersecting one another may be referred to as intersecting elements or intersecting one another, in at least one example. Further still, an element shown within another element or shown outside of another element may be referred as such, in one example. FIGS. 2A-4B and 6A-6B are drawn approximately to scale, although other dimensions or relative dimensions may be used.

The disclosure also provides support for a rebalancing cell for a redox flow battery, the rebalancing cell comprising: a cell enclosure, and a stack of electrode assemblies enclosed by the cell enclosure, each electrode assembly of the stack of electrode assemblies including a positive electrode interfacing with a flow field plate, wherein a face of the flow field plate interfacing with the positive electrode has a plurality of passages including tapered inlets and/or tapered outlets and partial channels configured to remove gas from electrolyte flowing therethrough. In a first example of the system, the plurality of passages is formed directly into the face of the flow field plate. In a second example of the system, optionally including the first example, the plurality of passages is formed into an insert configured to be coupled to the face of the flow field plate. In a third example of the system, optionally including one or both of the first and second examples, the plurality of passages is arranged in a partially interdigitated configuration. In a fourth example of the system, optionally including one or more or each of the first through third examples, the plurality of passages includes a first set of passages having the tapered inlets and outlets with the partial channels and a second set of passages having inlets with the partial channels and the tapered outlets. In a fifth example of the system, optionally including one or more or each of the first through fourth examples, the first set of passages and the second set of passages are arranged in an alternating pattern across the flow field plate. In a sixth example of the system, optionally including one or more or each of the first through fifth examples, the partial channels have narrowed diameters to allow gas to exit the flow field plate but not the electrolyte, and wherein the electrolyte is forcibly convected into the positive electrode. In a seventh example of the system, optionally including one or more or each of the first through sixth examples, the electrolyte is positive electrolyte circulated from a positive electrode compartment in which the positive electrode is positioned. In an eighth example of the system, optionally including one or more or each of the first through seventh examples, each electrode assembly further includes a negative electrode interfacing with the positive electrode, and wherein each electrode assembly is internally shorted. In a ninth example of the system, optionally including one or more or each of the first through eighth examples, the system further comprises: a hydrogen gas inlet for flowing H2 gas into the cell enclosure, an electrolyte inlet port for flowing electrolyte into the cell enclosure, and an electrolyte outlet port for expelling electrolyte from the cell enclosure. In a tenth example of the system, optionally including one or more or each of the first through ninth examples, the system further comprises: a sloped support coupled to the cell enclosure to tilt the cell enclosure with respect to a surface on which the sloped support rests.

The disclosure also provides support for a redox flow battery system, comprising: positive and negative electrode compartments respectively housing redox and plating electrodes, positive and negative electrolyte chambers respectively including a positive electrolyte for pumping to the positive electrode compartment and a negative electrolyte for pumping to the negative electrode compartment, where the positive and negative electrolyte chambers further include a common gas head space, and a rebalancing cell for electrolyte rebalancing of the positive electrolyte, the rebalancing cell being fluidically coupled to the positive electrode compartment and the common gas head space, wherein the electrolyte rebalancing of the positive electrolyte is driven via internal electrical shorting of interfacing pairs of positive and negative electrodes of the first rebalancing cell and by the positive electrolyte being directed through integrated channels of flow field plates interfacing with the positive electrodes. In a first example of the system, the integrated channels include partial channels for removing gas from a positive flow field of the flow field plates. In a second example of the system, optionally including the first example, the integrated channels are arranged in a partially interdigitated configuration to force convection of the positive electrolyte into the positive electrode. In a third example of the system, optionally including one or both of the first and second examples, the integrated channels include tapered inlets and tapered outlets, and wherein diameters of the tapered inlets are widest at entrances to the tapered inlets and wherein diameters of the tapered outlets are narrowest at entrances to the tapered outlets. In a fourth example of the system, optionally including one or more or each of the first through third examples, the integrated channels are machined or molded into a surface of the flow field plates interfacing with the positive electrodes, and wherein the flow field plates are formed of a polymer. In a fifth example of the system, optionally including one or more or each of the first through fourth examples, the integrated channels are machined or molded in inserts formed of a polymer, and wherein the inserts are coupled to a surface of flow field plates interfacing with the positive electrodes.

The disclosure also provides support for an electrode assembly for a rebalancing cell, comprising: an internally shorted interfacing pair of a positive electrode and a negative electrode, and a flow field plate in face-sharing contact with a surface of the positive electrode opposite of the negative electrode, wherein a face of the flow field plate facing the positive electrode has a plurality of partially interdigitated electrolyte channels with tapered inlets and outlets and constrictions for removing gas from positive electrolyte flowing through the plurality of partially interdigitated electrolyte channels of the flow field plate. In a first example of the system, the constrictions are configured to remove gas by providing flow paths for the gas to exit the flow field plate. In a second example of the system, optionally including the first example, the gas removed from the positive electrolyte is expelled from the rebalancing cell via a gas outlet port of the rebalancing cell.

The following claims particularly point out certain combinations and sub-combinations regarded as novel and non-obvious. These claims may refer to "an" element or "a first" element or the equivalent thereof. Such claims should be understood to include incorporation of one or more such elements, neither requiring nor excluding two or more such elements. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

**Claims**

1. A rebalancing cell for a redox flow battery, the rebalancing cell comprising:

    a cell enclosure; and
    a stack of electrode assemblies enclosed by the cell enclosure, each electrode assembly of the stack of electrode assemblies including a positive electrode interfacing with a flow field plate;
    wherein a face of the flow field plate interfacing with the positive electrode has a plurality of passages including tapered inlets and/or tapered outlets and partial channels configured to remove gas from electrolyte flowing therethrough.

2. The rebalancing cell of claim 1, wherein the plurality of passages is formed directly into the face of the flow field plate and/or the plurality of passages is formed into an insert configured to be coupled to the face of the flow field plate and/or the plurality of passages is arranged in a partially interdigitated configuration.

3. The rebalancing cell of claim 1, wherein the plurality of passages includes a first set of passages having the tapered inlets and outlets with the partial channels and a second set of passages having inlets with the partial channels and the tapered outlets, wherein preferably the first set of passages and the second set of passages are arranged in an alternating pattern across the flow field plate.

4. The rebalancing cell of claim 1, wherein the partial channels have narrowed diameters to allow gas to exit the flow field plate but not the electrolyte, and wherein the electrolyte is forcibly convected into the positive electrode.

5. The rebalancing cell of claim 1, wherein the electrolyte is positive electrolyte circulated from a positive electrode compartment in which the positive electrode is positioned.

6. The rebalancing cell of claim 1, wherein each electrode assembly further includes a negative electrode interfacing with the positive electrode, and wherein each electrode assembly is internally shorted.

7. The rebalancing cell of claim 1, further comprising a hydrogen gas inlet for flowing $H_2$ gas into the cell enclosure, an electrolyte inlet port for flowing electrolyte into the cell enclosure, and an electrolyte outlet port for expelling electrolyte from the cell enclosure.

8. The rebalancing cell of claim 1, further comprising a sloped support coupled to the cell enclosure to tilt the cell enclosure with respect to a surface on which the sloped support rests.

9. A redox flow battery system, comprising:

positive and negative electrode compartments respectively housing redox and plating electrodes;
positive and negative electrolyte chambers respectively including a positive electrolyte for pumping to the positive electrode compartment and a negative electrolyte for pumping to the negative electrode compartment, where the positive and negative electrolyte chambers further include a common gas head space; and
a rebalancing cell for electrolyte rebalancing of the positive electrolyte, the rebalancing cell being fluidically coupled to the positive electrode compartment and the common gas head space,
wherein the electrolyte rebalancing of the positive electrolyte is driven via internal electrical shorting of interfacing pairs of positive and negative electrodes of the first rebalancing cell and by the positive electrolyte being directed through integrated channels of flow field plates interfacing with the positive electrodes.

10. The redox flow battery system of claim 9, wherein the integrated channels include partial channels for removing gas from a positive flow field of the flow field plates and/or the integrated channels are arranged in a partially interdigitated configuration to force convection of the positive electrolyte into the positive electrode.

11. The redox flow battery system of claim 9, wherein the integrated channels include tapered inlets and tapered outlets, and wherein diameters of the tapered inlets are widest at entrances to the tapered inlets and wherein diameters of the tapered outlets are narrowest at entrances to the tapered outlets.

12. The redox flow battery system of claim 9, wherein the integrated channels are machined or molded into a surface of the flow field plates interfacing with the positive electrodes, and wherein the flow field plates are formed of a polymer; and/or the integrated channels are machined or molded in inserts formed of a polymer, and wherein the inserts are coupled to a surface of flow field plates interfacing with the positive electrodes.

13. An electrode assembly for a rebalancing cell, comprising:

an internally shorted interfacing pair of a positive electrode and a negative electrode; and
a flow field plate in face-sharing contact with a surface of the positive electrode opposite of the negative electrode, wherein a face of the flow field plate facing the positive electrode has a plurality of partially interdigitated electrolyte channels with tapered inlets and outlets and constrictions for removing gas from positive electrolyte flowing through the plurality of partially interdigitated electrolyte channels of the flow field plate.

14. The electrode assembly of claim 13, wherein the constrictions are configured to remove gas by providing flow paths for the gas to exit the flow field plate.

15. The electrode assembly of claim 13, wherein the gas removed from the positive electrolyte is expelled from the rebalancing cell via a gas outlet port of the rebalancing cell.

**FIG. 1**

**FIG. 2A**

FIG. 2B

FIG. 3

FIG. 4B

FIG. 4A

FIG. 5A    FIG. 5B

EP 4 345 954 A1

32

**FIG. 5C**

**FIG. 5D**

EP 4 345 954 A1

FIG. 5E

EP 4 345 954 A1

EP 4 345 954 A1

**FIG. 6A**

EP 4 345 954 A1

**FIG. 6B**

FIG. 7A

**FIG. 7B**

EP 4 345 954 A1

800

START

802

Receive H₂ and electrolyte at rebalancing cell via respective inlet ports

804

Distribute H₂ and electrolyte throughout electrode assembly stack

806

Induce flows of H₂ and electrolyte to perform rebalancing reaction at electrodes of electrode assembly stack

808

Induce flow of H₂ across negative electrodes via convection

810

Induce flow of electrolyte across positive electrodes via one or more of gravity feeding, capillary action, and convection

812

React H₂ gas with positively charged ions in electrolyte to reduce positively charged ions

814

Expel electrolyte and unreacted H₂ from rebalancing cell

816

Expel electrolyte via first outlet port

818

Expel excess H₂ via second outlet port

820

Expel H₂ in electrolyte via pressure release outlet port

RETURN

# FIG. 8

Europäisches
Patentamt

European
Patent Office

Office européen
des brevets

# EUROPEAN SEARCH REPORT

**Application Number**

EP 23 19 6241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2019/109334 A1 (KATO GARRETT SCOTT [US] ET AL) 11 April 2019 (2019-04-11) * paragraph [0047] – paragraph [0048] * ----- | 1,9,13 | INV. H01M8/0258 H01M8/04186 H01M8/18 |
| Y | US 10 818 952 B2 (UNIV NORTHEASTERN [US]) 27 October 2020 (2020-10-27) * column 10, line 30 – column 11, line 45 * ----- | 1,9,13 | |
| Y | WO 2020/236700 A1 (CREEK CHANNEL INC [US]) 26 November 2020 (2020-11-26) * page 24, line 16 – page 32, line 27 * ----- | 1,9,13 | |

**TECHNICAL FIELDS SEARCHED (IPC)**

H01M

The present search report has been drawn up for all claims

| Place of search | Date of completion of the search | Examiner |
|---|---|---|
| Munich | 8 February 2024 | Wiedemann, Eric |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 19 6241

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2024

| Patent document cited in search report | | Publication date | Patent family member(s) | | Publication date |
|---|---|---|---|---|---|
| US 2019109334 | A1 | 11-04-2019 | NONE | | |
| US 10818952 | B2 | 27-10-2020 | NONE | | |
| WO 2020236700 | A1 | 26-11-2020 | AU | 2020279121 A1 | 18-11-2021 |
| | | | CN | 111969234 A | 20-11-2020 |
| | | | EP | 3973585 A1 | 30-03-2022 |
| | | | JP | 2022535691 A | 10-08-2022 |
| | | | US | 10777836 B1 | 15-09-2020 |
| | | | US | 10826102 B1 | 03-11-2020 |
| | | | US | 2020373594 A1 | 26-11-2020 |
| | | | US | 2020373595 A1 | 26-11-2020 |
| | | | US | 2020373600 A1 | 26-11-2020 |
| | | | US | 2020373601 A1 | 26-11-2020 |
| | | | US | 2022069328 A1 | 03-03-2022 |
| | | | US | 2023231171 A1 | 20-07-2023 |
| | | | WO | 2020236700 A1 | 26-11-2020 |
| | | | ZA | 202109301 B | 25-10-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2273693 W
- US 63221325
- US 63221330